# EUROPEAN PATENT APPLICATION

(11) **EP 4 838 911 A1**
(43) Date of publication of application: **11.11.2026**
(21) Application number: 25747560.8
(22) Date of filing: 16.01.2025
(51) Int. Cl.: H04W 4/30

(54) **PPDU-BASED COMMUNICATION METHOD AND APPARATUS, AND READABLE STORAGE MEDIUM**

(30) Priority: 02.02.2024 CN 202410156971
(71) Applicant: Huawei Technologies Co., Ltd., Shenzhen, Guangdong 518129 (CN)
(72) Inventor: QIAN, Bin, Shenzhen, Guangdong 518129 (CN); HUANG, Lei, Shenzhen, Guangdong 518129 (CN); YANG, Xun, Shenzhen, Guangdong 518129 (CN); ZHOU, Zhengchun, Chengdu, Sichuan 611756 (CN); TANG, Xiaohu, Chengdu, Sichuan 611756 (CN)
(74) Representative: Isarpatent
(86) International application number: PCT/CN2025/072864
(87) International publication number: WO 2025/161988

(57) **Abstract**

This application relates to the field of wireless communication, and in particular, to a PPDU-based communication method, an apparatus, and a readable storage medium. The method includes: An AMP device sends an AMP PPDU, and the AMP PPDU includes a preamble sequence. For the preamble sequence, refer to descriptions in Table 2 to Table 8 in embodiments. This application may be applied to the AMP field, for example, supporting WPT, a WLAN, or an IEEE protocol family, for example, an IEEE 802.11 protocol related to AMP, or is applicable to another protocol in an IEEE 802.11 family, such as 802.11a/b/g, 802.11n, 802.11ac, 802.11ax, 802.11be, and 802.11bn.

## Description

This application claims priority to Chinese Patent Application No. 202410156971.9, filed with the China National Intellectual Property Administration on February 2, 2024 and entitled "PPDU-BASED COMMUNICATION METHOD, APPARATUS, AND READABLE STORAGE MEDIUM", which is incorporated herein by reference in its entirety.

### TECHNICAL FIELD

This application relates to the field of wireless communication technologies, and in particular, to a physical layer protocol data unit (physical layer protocol data unit, PPDU)-based communication method, an apparatus, and a readable storage medium.

### BACKGROUND

A conventional internet of things device is usually equipped with a battery with a limited service life. However, with great growth of internet of things networks and internet of things devices, maintenance costs (including labor and battery costs) also increase greatly. For example, billions of batteries are discarded every year, and only a small part thereof can be recycled, causing harmful impact on the Earth's ecosystem. For another example, in extreme ambient conditions (such as a high voltage, a high temperature, an extremely low temperature, and a humid environment), it may be difficult to maintain an operation of the internet of things network and replace the battery. To resolve the foregoing problem, battery-free internet of things communication is proposed. By collecting ambient power, network performance and sustainability can be effectively improved, and application scenarios are expanded. In addition, by removing the battery, a device size and costs can be significantly reduced to support various new applications.

Currently, the Institute of Electrical and Electronics Engineers (the Institute of Electrical and Electronics Engineers, IEEE) 802.11 working group discusses an internet of things device supporting a power collection capability, which may be referred to as an ambient power (ambient power, AMP) internet of things device or an AMP device, and can implement battery-free communication. This type of device may collect power from different sources, such as a radio wave, light (solar), motion, and thermal, to resolve a problem caused by a conventional battery.

Similar to a conventional wireless communication device (for example, a Wi-Fi (wireless-fidelity, wireless fidelity) device), the AMP device may transfer information by using a physical layer protocol data unit (physical layer protocol data unit, PPDU), and a preamble (preamble) sequence is an important part of the PPDU. In this case, how to design a preamble (preamble) sequence used in the AMP device is a problem being studied by a person skilled in the art.

### SUMMARY

Embodiments of this application provide a PPDU-based communication method, an apparatus, and a readable storage medium, to reduce power consumption of an AMP device.

The following describes this application from different aspects. It should be understood that mutual reference may be made to the following implementations and beneficial effects of different aspects.

The AMP device in this application may be a wireless communication device supporting AMP, for example, a high efficiency (high efficiency, HE) access point (access point, AP), an HE station (station, STA), an extremely high throughput (extremely high throughput, EHT) AP, an EHT STA, or an access point/station with a future-generation Wi-Fi standard that supports the AMP.

According to a first aspect, this application provides a PPDU-based communication method. The method may be applied to the AMP field, for example, may support wireless power transfer (wireless power transfer, WPT), a wireless local area network (wireless local area network, WLAN), or an IEEE protocol family. The method includes: A first communication apparatus generates and sends a PPDU, and the PPDU includes a preamble sequence. For a specific design and content of the preamble sequence, refer to descriptions in the following embodiments. The preamble sequence is different from a sequence used by a wake-up radio (wake-up radio, WUR) synchronization (WUR synchronization, WUR-Sync) field (for example, a WUR-Sync sequence).

For example, the PPDU may include a synchronization field (Sync field), the synchronization field may be generated or determined based on the preamble (preamble) sequence, and the preamble sequence (or the synchronization field) may be used to perform PPDU detection and time synchronization.

For example, the PPDU may be an AMP PPDU. In this application, the "AMP PPDU" may be understood as a PPDU sent or received by a wireless communication device (or referred to as an AMP device) supporting AMP, or a PPDU defined in an AMP-related protocol. The synchronization field may use on-off keying (On-Off keying, OOK) modulation, namely, binary amplitude keying (binary amplitude keying) modulation.

In this application, the preamble sequence used in the AMP PPDU is designed, and the preamble sequence is different from the sequence used by the WUR-Sync field, so that a receive end can distinguish between the AMP PPDU and a WUR PPDU, and the receive end can discover a type of a PPDU as early as possible, thereby reducing power consumption of the receive end (for example, the AMP device).

According to a second aspect, this application provides a PPDU-based communication method. The method may be applied to the AMP field, for example, may support WPT, a WLAN, or an IEEE protocol family. The method includes: A second communication apparatus receives and processes a PPDU, and the PPDU includes a preamble sequence. For a specific design and content of the preamble sequence, refer to descriptions in the following embodiments. The preamble sequence is different from a sequence used by a WUR-Sync field (for example, a WUR-Sync sequence).

For example, the PPDU may include a synchronization field (Sync field), the synchronization field may be generated or determined based on the preamble (preamble) sequence, and the preamble sequence (or the synchronization field) may be used to perform PPDU detection and time synchronization. The synchronization field may use on-off keying (On-Off keying, OOK) modulation, namely, binary amplitude keying (binary amplitude keying) modulation.

For example, the PPDU may be an AMP PPDU.

With reference to the first aspect or the second aspect, in a possible implementation, the preamble sequence includes two types of elements {0, 1}, a quantity of elements 0 and a quantity of elements 1 in the preamble sequence are equal, and a quantity of consecutive 0s in the preamble sequence is less than or equal to a first value. For example, the first value may be equal to 3.

For example, a length of the preamble sequence may be an even number. For example, the length of the preamble sequence may be an integer multiple of 8, for example, 16, 32, 48, 64, 96, or 128. Certainly, the length of the preamble sequence may alternatively be another value, for example, 24, 40, 42, 44, 46, 50, 52, 54, 56, 58, 60, 62, 80, 120, or 160. The length of the preamble sequence is not limited in this application.

With reference to the first aspect or the second aspect, in a possible implementation, transmission bandwidth of the preamble sequence is less than or equal to 20 MHz, for example, 4 MHz.

With reference to the first aspect or the second aspect, in a possible implementation, the preamble sequence is generated or determined based on a base sequence. For example, the length of the preamble sequence is related to a length of the base sequence. For example, the length of the preamble sequence may be an integer multiple of the length of the base sequence. The length of the base sequence may be any one of the following: 16, 24, 32, 40, 42, 44, 46, 48, 50, 52, 54, 56, 58, 60, 62, and 64. A quantity of elements 0 and a quantity of elements 1 in the base sequence are equal, and a quantity of consecutive 0s is less than or equal to the first value. For example, the first value may be equal to 3.

With reference to the first aspect or the second aspect, in a possible implementation, a maximum value of a cross-correlation between a local sequence that is of a receive end and that is corresponding to the preamble sequence and the sequence used by the WUR-Sync field is less than or equal to a preset value. The local sequence that is of the receive end and that is corresponding to the preamble sequence is related to a base sequence constituting the preamble sequence. For example, a local sequence L of the receive end may meet L=2*Wₐₘₚ-1, L=1-2*Wₐₘₚ, or L=Wₐₘₚ. Wₐₘₚ represents the base sequence.

For example, the preset value is related to the length of the base sequence. For example, when the length of the base sequence is any one of 16, 24, 32, or 40, the preset value may be 5. For another example, when the length of the base sequence is any one of 42, 44, 46, 48, 50, 52, 54, 58, 60, 62, or 64, the preset value may be 8. For another example, when the length of the base sequence is 56, the preset value may be 9.

In this application, the maximum value of the cross-correlation between the local sequence that is of the receive end and that is constructed based on the base sequence and the sequence used by the WUR-Sync field is restricted to be less than or equal to a value, so that the receive end distinguishes between the AMP PPDU and a WUR PPDU based on a received preamble sequence, and the receive end can discover a type of a PPDU as early as possible, thereby reducing power consumption of the receive end.

With reference to the first aspect or the second aspect, in a possible implementation, a ratio of a maximum value to a second maximum value of absolute values of a cross-correlation between the base sequence and the local sequence that is of the receive end and that is corresponding to the preamble sequence may be greater than or equal to a third value. The third value may be related to the length of the base sequence. For example, when the length of the base sequence is 16, the third value may be equal to 4; when the length of the base sequence is 32, the third value may be equal to (16/3); when the length of the base sequence is 48, the third value may be equal to (24/5); or when the length of the base sequence is 64, the third value may be equal to (32/7). The local sequence that is of the receive end and that is corresponding to the preamble sequence is related to a base sequence constituting the preamble sequence. For example, a local sequence L of the receive end may meet L=2*Wₐₘₚ-1, L=1-2*Wₐₘₚ, or L=Wₐₘₚ. Wₐₘₚ represents the base sequence.

In this embodiment of this application, a ratio of a maximum value to a second maximum value of absolute values of a cross-correlation between the base sequence and the local sequence of the receive end is restricted to be greater than or equal to a value, so that the receive end can more easily detect a signal peak, thereby improving synchronization performance.

With reference to the first aspect or the second aspect, in a possible implementation, the preamble sequence may be one of a plurality of predefined preamble sequences, and the plurality of preamble sequences may be determined based on a same base sequence. The plurality of preamble sequences may be used to represent different control information. In other words, each of the plurality of preamble sequences may be used to represent control information.

For example, the control information includes one or more of the following items: a payload (payload) rate (or a data rate) of the PPDU, a SIG field rate of the PPDU, a rate of the entire PPDU, an uplink or downlink mark of the PPDU, a version number of the PPDU, transmission opportunity (transmission opportunity, TXOP) duration of the PPDU, or a modulation scheme of the PPDU. For example, modulation schemes of the PPDU include but are not limited to one or more of the following items: a payload modulation scheme of the PPDU (or a data modulation scheme of the PPDU), a modulation scheme of a SIG field of the PPDU, a modulation and coding scheme (modulation and coding scheme, MCS) of a payload of the PPDU, or an MCS of the SIG field of the PPDU. Alternatively, the modulation scheme of the PPDU may be a modulation scheme or an MCS of the entire PPDU. In this application, different preamble sequences carry different control information, so that signaling overheads can be reduced.

For example, one or more of the foregoing plurality of predefined preamble sequences may be used to indicate different values of a same type of control information. For example, a preamble sequence 1 and a preamble sequence 2 may be used to respectively indicate a payload rate 1 and a payload rate 2. Certainly, the foregoing plurality of predefined preamble sequences may be respectively used to indicate different types of control information. For example, a preamble sequence 1 may be used to indicate a payload rate, and a preamble sequence 2 may be used to indicate an uplink or downlink flag of a PPDU. One of the foregoing plurality of predefined preamble sequences may be further used to indicate a plurality of types of control information. For example, a preamble sequence 1 may be used to indicate a payload rate, an uplink/downlink flag of a PPDU, and the like.

For example, the plurality of predefined preamble sequences include one or more of the following items: the base sequence; a complement of elements of the base sequence; the base sequence repeated K times; "the complement of the elements of the base sequence" repeated K times; a sequence consisting of the base sequence and the complement of the elements of the base sequence; "the sequence consisting of the base sequence and the complement of the elements of the base sequence" repeated K times; a sequence consisting of the base sequence repeated K times and the complement of the elements of the base sequence; a sequence consisting of the base sequence and "the complement of the elements of the base sequence" repeated K times; or a sequence consisting of the base sequence repeated K times and "the complement of the elements of the base sequence" repeated K times. K is a positive integer. The element complement indicates that an element 0 is changed to an element 1, and an element 1 is changed to an element 0.

With reference to the first aspect or the second aspect, in a possible implementation, the plurality of predefined preamble sequences include preamble sequences with a same length and/or preamble sequences with different lengths. For example, the plurality of preamble sequences include N preamble sequences with a same length, a Hamming distance among the N preamble sequences is greater than or equal to a second value, and N is an integer greater than or equal to 2.

According to a third aspect, this application provides a communication apparatus. The communication apparatus is configured to perform the method according to any one of the first aspect or the possible implementations of the first aspect. The communication apparatus includes modules for performing the method according to any one of the first aspect or the possible implementations of the first aspect.

According to a fourth aspect, this application provides a communication apparatus. The communication apparatus is configured to perform the method according to any one of the first aspect or the possible implementations of the first aspect. The communication apparatus includes modules for performing the method according to any one of the second aspect or the possible implementations of the second aspect.

In the third aspect or the fourth aspect, the communication apparatus may include a transceiver module and a processing module. For specific descriptions of the transceiver module and the processing module, refer to apparatus embodiments provided below. For beneficial effect of the second aspect and the fourth aspect, refer to the related descriptions of the first aspect and the second aspect. Details are not described herein again.

According to a fifth aspect, this application provides a communication apparatus. The communication apparatus includes a processor, configured to perform the method according to any one of the first aspect, or the second aspect, or the possible implementations of the first aspect or the second aspect. Alternatively, the processor is configured to execute a program stored in a memory. When the program is executed, the method according to any one of the first aspect, or the second aspect, or the possible implementations of the first aspect or the second aspect is performed.

With reference to the fifth aspect, in a possible implementation, the memory is located outside the communication apparatus.

With reference to the fifth aspect, in a possible implementation, the memory is located inside the communication apparatus.

In this application, the processor and the memory may alternatively be integrated into one component. In other words, the processor and the memory may alternatively be integrated together. For example, the communication apparatus may be a chip.

With reference to the fifth aspect, in a possible implementation, the communication apparatus further includes a transceiver, and the transceiver is configured to send or receive a PPDU.

According to a sixth aspect, this application provides a communication apparatus. The communication apparatus may include a logic circuit and an interface, and the logic circuit is coupled to the interface. The interface is configured to exchange (or receive/send or input/output) information or data. The logic circuit is configured to run program instructions, so that the communication apparatus performs the method according to any one of the first aspect, or the second aspect, or the possible implementations of the first aspect or the second aspect. The interface may be a communication interface or a transceiver. The transceiver may be a radio frequency module in the communication apparatus, a combination of a radio frequency module and an antenna, or an input/output interface of a chip or a circuit.

According to a seventh aspect, this application provides a readable storage medium, and the readable storage medium stores program instructions. When the program instructions are run on a computer, the computer is enabled to perform the method according to any one of the first aspect, or the second aspect, or the possible implementations of the first aspect or the second aspect.

According to an eighth aspect, this application provides a computer program product including program instructions. When the program product runs, the method according to any one of the first aspect, or the second aspect, or the possible implementations of the first aspect or the second aspect is performed.

According to a ninth aspect, this application provides a communication system. The communication system includes a first communication apparatus and a second communication apparatus. The first communication apparatus is configured to perform the method according to any one of the first aspect or the possible implementations of the first aspect, and the second communication apparatus is configured to perform the method according to any one of the second aspect or the possible implementations of the second aspect.

For technical effect achieved in the foregoing aspects, refer to each other or refer to beneficial effect in the method embodiments described below. Details are not repeated herein.

### BRIEF DESCRIPTION OF DRAWINGS

FIG. 1 is a diagram of a network architecture of a wireless communication system according to an embodiment of this application;
FIG. 2 is a diagram of a format of a WUR PPDU according to an embodiment of this application;
FIG. 3 is a diagram of a possible format of an AMP PPDU according to an embodiment of this application;
FIG. 4 is a schematic flowchart of a PPDU-based communication method according to an embodiment of this application;
FIG. 5 is a diagram of a manner of generating an On symbol according to an embodiment of this application;
FIG. 6 is a diagram of a basic principle of backscatter communication according to an embodiment of this application;
FIG. 7 is a diagram of signals "0" and "1" in backscatter communication according to an embodiment of this application;
FIG. 8 is a diagram of a structure of a communication apparatus according to an embodiment of this application;
FIG. 9 is a diagram of another structure of a communication apparatus according to an embodiment of this application; and
FIG. 10 is a diagram of still another structure of a communication apparatus according to an embodiment of this application.

### DESCRIPTION OF EMBODIMENTS

The following clearly describes the technical solutions in embodiments of this application with reference to the accompanying drawings in embodiments of this application.

In descriptions of this application, "first", "second", and the like are merely intended to distinguish between different objects but do not indicate a particular order. In addition, unless otherwise specified, "/" represents "or". For example, A/B may represent A or B. A term "and/or" in this specification describes only an association relationship between associated objects and indicates that there may be three relationships. For example, A and/or B may represent the following three cases: Only A exists, both A and B exist, and only B exists. In addition, "at least one" means one or more, and "a plurality of" means two or more. "One or more of the following items (pieces)" or a similar expression thereof means any combination of these items, including a single item (piece) or any combination of a plurality of items (pieces). For example, at least one of a, b, or c may represent a, b, c, a and b, a and c, b and c, or a, b, and c. a, b, and c each may be singular or plural.

Terms "include", "have", and any variants thereof are intended to cover a non-exclusive inclusion. For example, a process, a method, a system, a product, or a device that includes a series of steps or units is not limited to the listed steps or units, but optionally further includes an unlisted step or unit, or optionally further includes another step or unit inherent to the process, the method, the product, or the device.

In this application, the term "example" or "for example" is used to represent giving an example, an illustration, or a description. Any embodiment or design scheme described as "example", "such as" or "for example" in this application should not be explained as being more preferred or having more advantages than another embodiment or design scheme. Exactly, use of the word "example", "such as", "for example", or the like is intended to present a related concept in a specific manner.

It should be understood that, in this application, "when", "if", and "provided that" all mean that an apparatus performs corresponding processing in an objective situation, and are not intended to limit time. The terms do not mean that the apparatus is required to perform a determining action during implementation, and do not mean any other limitation. The apparatus performing the corresponding processing in the objective situation includes: The corresponding processing can be performed when the objective situation is met; or the corresponding processing can be performed only when the objective situation and other situations are met.

In this application, unless otherwise specified, an element indicated in a singular form is intended to indicate "one or more", but does not indicate "one and only one".

It may be understood that in embodiments of this application, "B corresponding to A", "A corresponds to B", or a similar expression indicates that B is associated with A and B may be determined based on A. Determining B based on A does not mean that B is determined based only on A. B may alternatively be determined based on A and/or other information.

The technical solutions provided in embodiments of this application may be applied to the AMP field, for example, may support wireless power transfer (wireless power transfer, WPT), a wireless local area network (wireless local area network, WLAN), or an Institute of Electrical and Electronics Engineers (Institute of Electrical and Electronics Engineers, IEEE) protocol family.

The technical solutions provided in the embodiments of this application are applicable to an IEEE 802.11 protocol related to AMP, or applicable to another protocol in an IEEE 802.11 family, such as the 802.11a/b/g protocol, the 802.11n protocol, the 802.11ac protocol, the 802.11ax protocol, the 802.11be protocol (also referred to as Wi-Fi 7, extremely high throughput (extremely high throughput, EHT)), the 802.11ad protocol, the 802.11ay protocol, the 802.11bn protocol (802.11bn is also referred to as Wi-Fi 8, or referred to as ultra-high reliability (ultra-high reliability, UHR)), a next-generation protocol of 802.11bn, or the like. This is not listed one by one herein. The technical solutions provided in embodiments of this application may be further applied to a wireless personal area network (wireless personal area network, WPAN) based on millimeter wave (millimeter wave, MMW) and ultra-wideband (ultra-wideband, UWB) technologies, and the like. For example, the technical solutions provided in embodiments of this application are applicable to an IEEE 802.15 protocol family such as the 802.15.4a protocol, the 802.15.4z protocol, the 802.15.4ab protocol, or a future-generation UWB WPAN protocol. This is not listed one by one. The technical solutions provided in embodiments of this application may also be applied to a sensing (sensing) system, for example, 802.11bf series standards.

The 802.11n standard is referred to as high throughput (high throughput, HT), the 802.11ac standard is referred to as a very high throughput (very high throughput, VHT) standard, the 802.11ax standard is referred to as a high efficiency (high efficiency, HE) standard, and the 802.11be standard is referred to as an extremely high throughput (extremely high throughput, EHT) standard. 802.11bf includes two major categories of standards: a low-frequency (for example, sub-7 GHz) standard and a high-frequency (for example, 60 GHz) standard. An implementation of sub-7 GHz mainly depends on 802.11ac, 802.11ax, 802.11be, a next-generation standard, and the like. An implementation of 60 GHz mainly depends on 802.11ad, 802.11ay, a next-generation standard, and the like. 802.11ad may also be referred to as a directional multi-gigabit (directional multi-gigabit, DMG) standard, and 802.11ay may also be referred to as an enhanced directional multi-gigabit (enhanced directional multi-gigabit, EDMG) standard.

The technical solutions provided in embodiments of this application may be further applied to the following communication systems, for example, an internet of things (internet of things, IoT) system, vehicle-to-everything (vehicle-to-everything, V2X, where X may represent anything), device-to-device (device-to-device, D2D), a narrow band internet of things (narrow band internet of things, NB-IoT) system, a long term evolution (long term evolution, LTE) system, a 5th generation (5th generation, 5G) communication system, a new communication system emerging in future communication development, and the like. For example, the V2X may include vehicle-to-vehicle (vehicle-to-vehicle, V2V), vehicle-to-infrastructure (vehicle-to-infrastructure, V2I), vehicle-to-pedestrian (vehicle-to-pedestrian, V2P) communication, or vehicle-to-network (vehicle-to-network, V2N) communication.

The technical solutions in embodiments of this application are applicable to a communication scenario between an access point and a station. In embodiments of this application, the term "communication" may also be described as "data transmission", "information transmission", or "transmission". In the embodiments of this application, the term "transmission" may also be described as "sending" and/or "receiving".

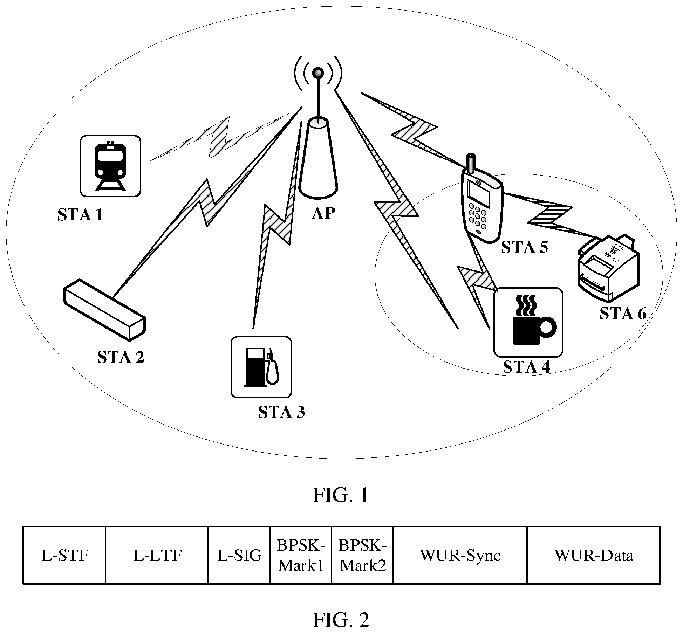

FIG. 1 is a diagram of a network architecture of a wireless communication system according to an embodiment of this application. As shown in FIG. 1, the wireless communication system may include one or more access point (access point, AP) stations (station, STA), and one or more non-access point stations (non-access point station, non-AP STA). For ease of description, in this specification, the access point station (AP STA) is briefly referred to as an access point (AP), and the non-access point station (non-AP STA) is briefly referred to as a station (STA). FIG. 1 illustrates an example in which the wireless communication system includes one AP and six stations (a STA 1, a STA 2, a STA 3, a STA 4, a STA 5, and a STA 6). In actual application, the wireless communication system may include more or fewer APs and STAs. A quantity of APs and a quantity of STAs in the wireless communication system are not limited in this application.

In a possible implementation, the access point may be an access point for a terminal device (such as a mobile phone) to access a wired (or wireless) network, and is mainly deployed in a home, a building, and a park. A typical coverage radius is tens of meters to hundreds of meters. Certainly, the access point may alternatively be deployed outdoors. The access point is equivalent to a bridge that connects a wired network and a wireless network, and is mainly used to connect various wireless network clients together and then connect the wireless network to the Ethernet. For example, the access point may be a terminal device (such as a mobile phone) with a wireless fidelity (wireless-fidelity, Wi-Fi) chip or a network device (such as a communication entity such as a communication server, a router, a switch, or a bridge).

The access point in this application may be a wireless communication device supporting AMP, for example, an HE AP or an EHT AP that supports AMP, or an access point with a future-generation Wi-Fi standard. For example, the access point may support a plurality of WLAN standards of an 802.11 family, such as 802.11bn, 802.11be, 802.11bf, 802.11ax, 802.11ac, 802.11n, 802.11g, 802.11b, 802.11ad, 802.11ay, and 802.11a. For example, the access point may further support a UWB-related protocol or a sensing protocol.

In a possible implementation, the station may be a wireless communication chip, a wireless sensor, a wireless communication terminal, or the like, and may also be referred to as a user. For example, the station may be a mobile phone supporting a Wi-Fi communication function, a tablet computer supporting a Wi-Fi communication function, a set-top box supporting a Wi-Fi communication function, a smart television supporting a Wi-Fi communication function, an intelligent wearable device supporting a Wi-Fi communication function, a vehicle-mounted communication device supporting a Wi-Fi communication function, a computer supporting a Wi-Fi communication function, a tag supporting a Wi-Fi communication function, a sensor supporting a Wi-Fi communication function, or the like.

Alternatively, the station in this application may be a wireless communication device supporting AMP, for example, an HE STA or an EHT STA that supports AMP, or a station with a future-generation Wi-Fi standard. For example, the station may support a plurality of WLAN standards of an 802.11 family, such as 802.11bn, 802.11be, 802.11bf, 802.11ax, 802.11ac, 802.11n, 802.11g, 802.11b, 802.11ad, 802.11ay, and 802.11a. For example, the station may further support a UWB-related protocol or a sensing protocol.

For example, AMP application scenarios include but are not limited to a smart home, a smart farm, a smart factory, logistics/warehousing, supermarket delivery, indoor positioning, a data center, and the like. With popularization of the AMP application scenarios, an AMP system may be applied to more scenarios or industries. For example, the AMP system is applied to an internet of things industry, an internet of vehicles industry, a banking industry, or is applied to an enterprise office, a stadium, an exhibition hall, a concert hall, a hotel room, a dormitory, a ward, a classroom, a supermarket, a square, a street, a production workshop, a warehouse, and the like. Certainly, a device (for example, an access point or a station) that supports WLAN communication or sensing may be a sensor node (for example, a smart water meter, a smart electricity meter, or a smart air detection node) in a smart city, a smart device (for example, a smart camera, a projector, a display, a television, a speaker, a refrigerator, or a washing machine) in a smart home, an internet of things node, an entertainment terminal (for example, a wearable device like an augmented reality (augmented reality, AR) device or a virtual reality (virtual reality, VR) device), a smart device (for example, a printer, a projector, a loudspeaker, or a speaker) in smart office, an internet of vehicles device in the internet of vehicles, an infrastructure in a daily life scenario (for example, a vending machine, a self-service navigation console of a supermarket, a self-service cashier device, or a self-service ordering machine), a device in a large sports and music venue, or the like.

Although embodiments of this application are mainly described by using a network in which IEEE 802.11 is deployed as an example, a person skilled in the art easily understands that aspects in this application may be extended to another network using various standards or protocols, for example, a personal local area network (personal area network, PAN), Bluetooth (BLUETOOTH), high performance radio LAN (high performance radio LAN, HIPERLAN) (a wireless standard similar to the IEEE 802.11 standard, mainly used in Europe), a wide area network (wide area network, WAN), or other networks that are known or developed in the future. Therefore, regardless of used coverage and a used wireless access protocol, various aspects provided in this application are applicable to any appropriate wireless network.

Due to a device capability limitation and backward compatibility, a Wi-Fi system supporting AMP can reuse an existing Wi-Fi design to a maximum extent. In a possible implementation, an ambient power (ambient power, AMP) physical layer protocol data unit (physical layer protocol data unit, PPDU) may refer to a wake-up radio (wake-up radio, WUR) physical layer protocol data unit (PPDU), and on this basis, a low-power, low-complexity AMP PPDU is designed.

In this application, an "AMP PPDU" may be understood as a PPDU sent or received by a wireless communication device (or referred to as an AMP device) supporting AMP, or a PPDU defined in an AMP-related protocol.

In a possible implementation, refer to FIG. 2. FIG. 2 is a diagram of a format of a WUR PPDU according to an embodiment of this application. As shown in FIG. 2, a format of the WUR (802.11ba) PPDU includes but is not limited to a legacy short training field (legacy short training field, L-STF), a legacy long training field (legacy long training field, L-LTF), a legacy signal field (legacy signal field, L-SIG), a binary phase shift keying (binary phase shift keying, BPSK) mark 1 (BPSK-Mark1), a binary phase shift keying mark 2 (BPSK-Mark2), a WUR synchronization (WUR synchronization, WUR-Sync) field, and a WUR data (WUR-Data) field. (Transmission) bandwidths of the L-STF, the L-LTF, the L-SIG, the BPSK-Mark1, and the BPSK-Mark2 are 20 MHz, and (transmission) bandwidths of WUR-Sync and WUR-Data are 4 MHz. Each field (field) of the WUR PPDU may include one or more symbols (symbol). Duration of the L-STF and the L-LTF is 8 µs (microsecond), and duration of the L-SIG, the BPSK-Mark1, and the BPSK-Mark2 is 4 µs. A sequence used by the WUR-Sync field is obtained after a repetition operation or an element complement operation is performed on a sequence W. For example, the sequence W=[1 0 1 0 0 1 0 0 1 0 1 1 1 0 1 1 0 0 0 1 0 1 1 1 0 0 1 1 1 0 0 0]. For a WUR low data rate (WUR low data rate, WUR LDR), the sequence used by the WUR-Sync field is obtained after the sequence W is repeated twice. The sequence used by the WUR-Sync field may use on-off keying (On-Off keying, OOK) modulation, namely, binary amplitude keying (binary amplitude keying) modulation, and duration of each OOK symbol is 2 µs. Therefore, duration of the WUR-Sync field is 128 µs for the WUR LDR. For a WUR high data rate (WUR high data rate, WUR HDR), the sequence used by the WUR-Sync field is a complement of elements in the sequence W, that is, an element 1 in the sequence W is changed to an element 0, and an element 0 is changed to an element 1, to obtain *w̅*. *w̅* =[0 1 0 1 1 0 1 1 0 1 0 0 0 1 0 0 1 1 1 0 1 0 0 0 1 1 0 0 0 1 1 1]. The sequence used by the WUR-Sync field may use on-off keying (OOK) modulation, and the duration of each OOK symbol is 2 µs. Therefore, duration of the WUR-Sync field is 64 µs for the WUR HDR.

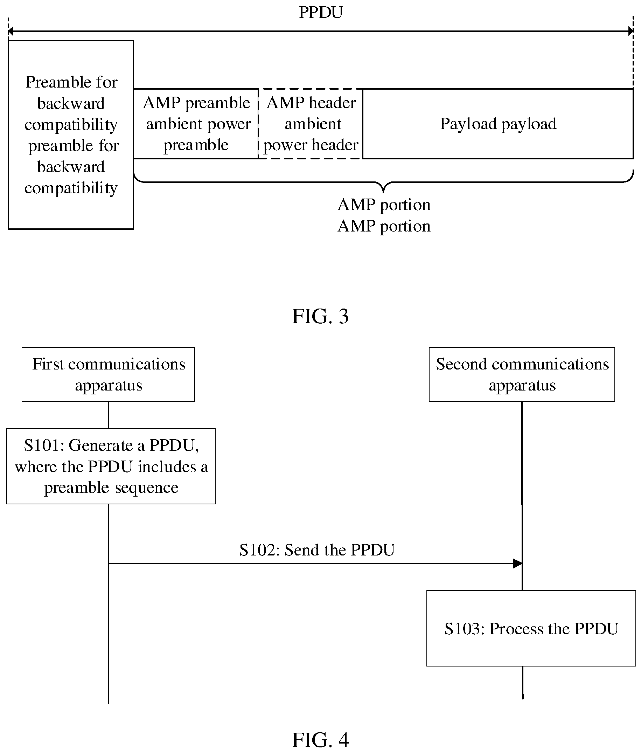

Due to requirements of the AMP device for low costs, low complexity, and low power, the WUR PPDU may be used as a reference. A possible structure of AMP PPDU is shown in FIG. 3. FIG. 3 is a diagram of a possible format of an AMP PPDU according to an embodiment of this application. As shown in FIG. 3, the possible structure of the AMP PPDU includes but is not limited to: a preamble for backward compatibility (preamble for backward compatibility), and an ambient power preamble (AMP preamble). For example, the AMP PPDU may further include an ambient power header (AMP header) and/or a payload (payload). The preamble for backward compatibility may be further understood as a legacy preamble (legacy preamble), or some legacy signal fields, or some legacy PPDU identifier fields, for example, may include any one or more of the following items: an L-STF, an L-LTF, an L-SIG, a BPSK Mark, and the like. The AMP preamble may include an AMP synchronization (AMP synchronization, AMP Sync) field (AMP Sync field). The AMP synchronization field may include a determined sequence (for example, a synchronization sequence or a preamble sequence). Details are not described again below. The AMP header may also be understood as an AMP signal field (AMP SIG field), and the two may be used interchangeably. The AMP payload (payload) may be understood as an AMP data field (AMP data field), and the two may be used interchangeably.

For example, a (transmission) bandwidth of the preamble for backward compatibility is 20 MHz, and a function of the preamble for backward compatibility is backward compatibility. (Transmission) bandwidths of the AMP preamble, the AMP header, and the payload are less than 20 MHz, for example, 4 MHz.

In conclusion, it can be learned that the AMP PPDU is designed with reference to the WUR PPDU, but how to distinguish between the AMP PPDU and the WUR PPDU is still to be explored.

In view of this, embodiments of this application provide a PPDU-based communication method, an apparatus, and a readable storage medium, which may be applied to the AMP field. A preamble sequence of an AMP PPDU is designed to distinguish between an AMP PPDU and a WUR PPDU, so that a receive end can discover a type of a PPDU as early as possible, thereby reducing power consumption of the receive end (for example, an AMP device).

In this application, unless otherwise specified, for same or similar parts of embodiments or implementations, refer to each other. In embodiments of this application and the implementations/implementation methods in embodiments, unless otherwise specified or a logical conflict occurs, terms and/or descriptions are consistent and may be mutually referenced between different embodiments and between the implementations/implementation methods in embodiments. Technical features in the different embodiments and the implementations/implementation methods in embodiments may be combined to form a new embodiment, implementation, or implementation method based on an internal logical relationship thereof. The following implementations of this application are not intended to limit the protection scope of this application.

In a possible implementation, a communication apparatus in this application may be a wireless communication device supporting AMP, for example, the AP or the STA supporting AMP in FIG. 1. In some embodiments, the communication apparatus in this application may alternatively be a multi-link device (multi-link device, MLD) supporting AMP or a station that supports AMP and that is in a multi-link device (MLD). The multi-link device is a wireless communication device that supports parallel transmission on a plurality of links. Compared with a device supporting only single-link transmission, the multi-link device has higher transmission efficiency and a higher throughput. The multi-link device includes one or more affiliated stations STA (affiliated STA). The affiliated STA may be a logical station, or may be a physical station. One station may operate on one link, one band, or one channel. The affiliated station may be an access point (AP) or a non-access point station (non-AP STA). A multi-link device whose affiliated station is an AP may be referred to as an AP MLD, and a multi-link device whose affiliated station is a non-AP STA may be referred to as a non-AP MLD.

For example, the communication apparatus in this application may support an IEEE 802.11 protocol related to AMP, and may further support another protocol in an IEEE 802.11 family, a plurality of WLAN standards of the 802.11 family, such as 802.11bn, 802.11be, 802.11bf, 802.11ax, 802.11ac, 802.11n, 802.11g, 802.11b, 802.11ad, 802.11ay, and 802.11a. For example, the communication apparatus in this application may further support a UWB-related protocol or a sensing protocol. This is not listed one by one herein.

FIG. 4 is a schematic flowchart of a PPDU-based communication method according to an embodiment of this application. As shown in FIG. 4, the PPDU-based communication method includes but is not limited to the following steps.

S101: A first communication apparatus generates a PPDU, where the PPDU includes a preamble sequence. For example, the preamble sequence (preamble sequence) in this embodiment of this application may also be referred to as a synchronization sequence (Sync sequence), and the two may be used interchangeably. Details are not described below again. The preamble sequence is different from a sequence used by a WUR-Sync field (for example, a WUR-Sync sequence). For a specific design and content of the preamble sequence, refer to the following description.

S102: The first communication apparatus sends the PPDU.

Correspondingly, a second communication apparatus receives the PPDU.

S103: The second communication apparatus processes the PPDU. For example, in a communication process, the first communication apparatus in this embodiment of this application may also be referred to as a transmit end, and the second communication apparatus may also be referred to as a receive end.

In a possible implementation, the PPDU may include a synchronization field (Sync field), the synchronization field may be generated/determined based on a preamble (preamble) sequence, and the preamble sequence (or the synchronization field) may be used to perform PPDU detection and time synchronization. Certainly, the preamble sequence (or the synchronization field) may be further used to implement another function. This is not limited in this embodiment of this application. For example, a transmission bandwidth of the preamble sequence may be less than or equal to 20 MHz. For example, the transmission bandwidth of the preamble sequence is 4 MHz. In other words, a transmission bandwidth of the synchronization field (Sync field) of the PPDU is less than or equal to 20 MHz. The synchronization field may be modulated by using OOK. For example, the PPDU may be an AMP PPDU. For example, a frame format of the PPDU may be shown in FIG. 3. Certainly, the frame format of the PPDU may alternatively be in another form. This is not limited in this embodiment of this application.

In a possible implementation, a length of the preamble sequence may be an even number. For example, the length of the preamble sequence may be an integer multiple of 8, for example, 16, 32, 48, 64, 96, or 128. Certainly, the length of the preamble sequence may alternatively be another value, for example, 24, 40, 42, 44, 46, 50, 52, 54, 56, 58, 60, 62, 80, 120, or 160. The length of the preamble sequence is not limited in this embodiment of this application.

In a possible implementation, the preamble sequence may be a binary sequence including two types of elements {0, 1}. For specific content of the preamble sequence, refer to the following descriptions. For example, a quantity of elements 0 and a quantity of elements 1 in the preamble sequence are equal, and a quantity of consecutive 0s in the preamble sequence is less than or equal to a first value. For example, the first value may be equal to 3.

In a possible implementation, the preamble sequence may be determined based on a base sequence. For example, the preamble sequence may consist of the base sequence transformed one or more times. For details, refer to the following description. For example, the length of the preamble sequence is related to a length of the base sequence. For example, the length of the preamble sequence may be an integer multiple of the length of the base sequence. The length of the base sequence may be any one of the following: 16, 24, 32, 40, 42, 44, 46, 48, 50, 52, 54, 56, 58, 60, 62, and 64. A quantity of elements 0 and a quantity of elements 1 in the base sequence are equal, and a quantity of consecutive 0s is less than or equal to the first value.

In a possible implementation, the preamble sequence may be one of a plurality of predefined preamble sequences, and the plurality of preamble sequences may be determined based on a same base sequence. For example, for specific content of the plurality of preamble sequences, refer to the following descriptions. The plurality of preamble sequences may be used to represent different control information. The control information may include one or more of the following items: a payload rate (or a data rate) of the PPDU, a SIG field rate of the PPDU, a rate of the entire PPDU, an uplink or downlink mark of the PPDU, a version number of the PPDU, transmission opportunity (transmission opportunity, TXOP) duration of the PPDU, or a modulation scheme of the PPDU. For example, modulation schemes of the PPDU include but are not limited to one or more of the following items: a payload modulation scheme of the PPDU (or a data modulation scheme of the PPDU), a modulation scheme of a SIG field of the PPDU, a modulation and coding scheme (modulation and coding scheme, MCS) of a payload of the PPDU, or an MCS of the SIG field of the PPDU. Alternatively, the modulation scheme of the PPDU may be a modulation scheme or an MCS of the entire PPDU. In this embodiment of this application, different preamble sequences carry different control information, so that signaling overheads can be reduced.

For example, the plurality of predefined preamble sequences may include preamble sequences with a same length and/or preamble sequences with different lengths. For example, the plurality of preamble sequences include N preamble sequences with a same length, a Hamming distance among the N preamble sequences is greater than or equal to a second value, and N is an integer greater than or equal to 2. The second value is related to the length of the base sequence or the preamble sequence. For details, refer to the following description.

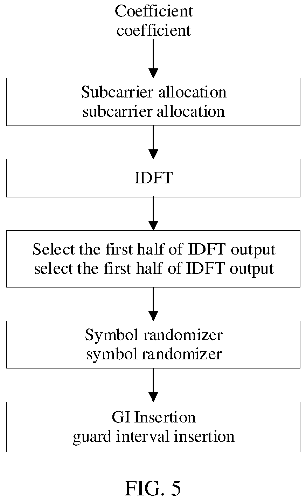

In a possible implementation, the first communication apparatus (for example, an AP or a STA) generates and sends an AMP PPDU. For example, for a transmission manner of the AMP PPDU, refer to a transmission manner of a WUP PPDU. In other words, a transmission manner of a synchronization field in the AMP PPDU may be the same as or similar to a transmission manner of a synchronization field in the WUR PPDU. This application mainly focuses on the transmission manner of the synchronization field in the AMP PPDU. For example, the synchronization field in the AMP PPDU may use multi-carrier OOK (multi-carrier OOK, MC-OOK) modulation, symbols of the MC-OOK modulation may be classified into an on (On) symbol and an off (Off) symbol, and duration of each symbol is 2 microseconds (µs). The On symbol represents an element 1, and the Off symbol represents an element 0. It may be understood that, for the synchronization field in the AMP PPDU, the On symbol corresponds to an element 1 in the preamble sequence, and the Off symbol corresponds to an element 0 in the preamble sequence. A process of generating an On symbol is shown in FIG. 5. FIG. 5 is a diagram of a manner of generating an On symbol according to an embodiment of this application. 64 subcarriers are used, a subcarrier spacing is 312.5 kHz, and a sampling rate is 20 MHz. As shown in FIG. 5, coefficients are allocated to the subcarriers. A subcarrier coefficient numbered k=(-6, -4, -2, 2, 4, 6) is a non-zero value, and other subcarrier coefficients are all zero. A value of the non-zero subcarrier may be BPSK, quadrature phase shift keying (quadrature phase shift keying, QPSK), 16-QAM (quadrature amplitude modulation, quadrature amplitude modulation), 64-QAM, or any value of a 256-QAM constellation point. As shown in FIG. 5, the 64 subcarriers obtained after the coefficients are allocated are processed by using a 64-point inverse discrete Fourier transform (inverse discrete Fourier transform, IDFT), first 32 output points are selected, and randomization processing is performed on the first 32 output points. As shown in FIG. 5, last eight points in the 32 points obtained after the randomization processing are used as a guard interval (guard interval, GI), and are placed before the 32 points, to obtain 40 sampling points in total, which may represent an On symbol of 2 microseconds, that is, one On symbol. In other words, one On symbol includes 40 sampling points. For one Off symbol, 40 "0"s are output.

For another example, a symbol obtained after the OOK modulation is performed on the synchronization field in the AMP PPDU may alternatively be in a form of pulse, for example, a root rising cosine pulse or a Gaussian pulse. For example, assuming that each symbol of the synchronization field in the AMP PPDU is 2 microseconds, the On symbol may indicate that a pulse with a width of 2 microseconds exists, for example, the width is a width of 3 dB (decibel, decibel) downward from a pulse peak; and the Off symbol indicates that no pulse exists. For the synchronization field in the AMP PPDU, the On symbol corresponds to an element 1 in the preamble sequence, and the Off symbol corresponds to an element 0 in the preamble sequence.

For another example, a transmission manner of the synchronization field in the AMP PPDU may be backscatter communication (backscatter communication). The backscatter communication is also called modulated backscatter (modulated backscatter). It may be understood that the backscatter communication is a technology applicable to a low-cost (low cost) and low-power (low power) system. Different from a conventional communication technology, a transmitter in the backscatter communication does not generate or send a radio frequency (radio frequency, RF) signal, but sends information by modulating a radio frequency signal in an environment. Radio frequency signals in the environment include but are not limited to: a wireless television signal, a broadcast signal, a signal sent by a mobile communication station, a signal sent by a Wi-Fi AP (router), a signal sent by a dedicated card reader, and the like.

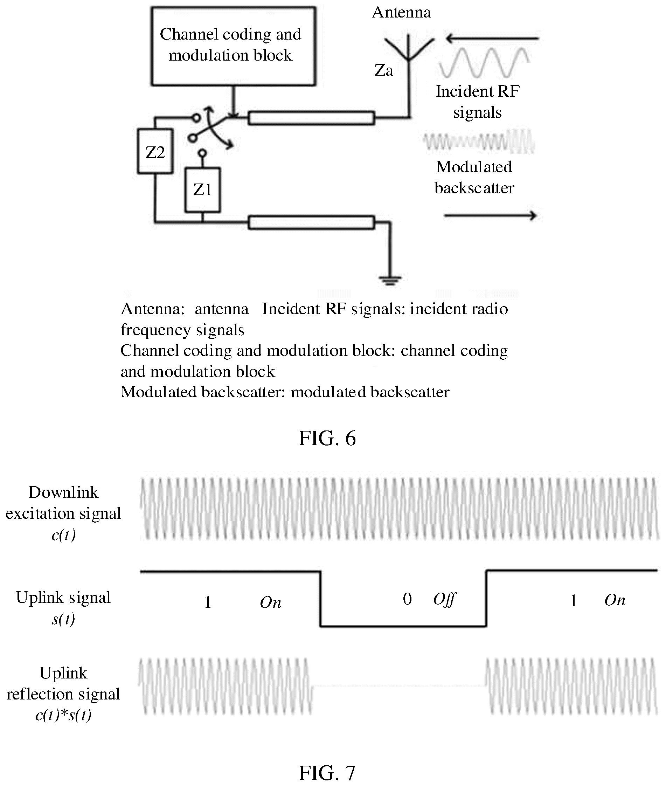

FIG. 6 is a diagram of a basic principle of backscatter communication according to an embodiment of this application. As shown in FIG. 6, a basic principle of the backscatter communication is as follows: (1) A backscatter (backscatter) device usually does not carry a battery. In other words, a battery is not used to supply power to a backscatter device for radio frequency signal sending and receiving, to achieve a low power function. (2) The backscatter device adopts a manner of collecting an RF signal in the environment for power supply (which is similar to wireless charging). When there is the radio frequency signal in the environment, the backscatter device stores power sensed by an antenna into a power storage device such as a capacitor. When the stored power reaches a specific threshold, the device can start to operate. Due to this operating mode, the backscatter device may drive only a microwatt (µW)-level sensor. (3) The backscatter device transmits a signal in a manner of controlling impedance of a transmit antenna. It may be understood that the first communication apparatus in this embodiment of this application may be a backscatter device. Simplest OOK (On-Off Keying, binary on-off keying) is used as an example. Assuming that a received signal is x, and a reflected (or sent) signal is y, a relationship between x and y may be represented as follows: $y = Γ x$ (1-1)
where Γ represents a reflection coefficient, and Γ may be represented as: $Γ = \frac{{Z}_{i} - {{Z}_{a}}^{∗}}{{Z}_{i} + {{Z}_{a}}^{∗}}$ (1-2)
where Z*ₐ* represents impedance of an antenna, and is usually 50 ohms. Zᵢ represents matched impedance in an ith state, for example, Z₁ and Z₂ in FIG. 6.

Based on the foregoing assumption, the first communication apparatus sends signals "0" and "1" in the following manner:
Zᵢ=Z*ₐ* and a reflection coefficient Γ =0 are selected, and power of the RF signal is absorbed. In this case, the first communication apparatus does not reflect (or does not send) a signal, representing an Off state. Zᵢ≠Z*ₐ* and a reflection coefficient Γ ≠0 are selected, and power of the RF signal is reflected. In this case, the first communication apparatus reflects (or sends) a signal, representing an On state. It may be understood that, for the synchronization field in the AMP PPDU, the On state corresponds to the element 1 in the preamble sequence, and the Off state corresponds to the element 0 in the preamble sequence. For example, refer to FIG. 7. FIG. 7 is a diagram of signals "0" and "1" in backscatter communication according to an embodiment of this application. As shown in FIG. 7, a downlink excitation signal c(t) may represent a radio frequency signal in an environment, an uplink information s(t) may represent a preamble sequence used by the synchronization field in the AMP PPDU, and an uplink reflection signal c(t)*s(t) may represent a signal output by the first communication apparatus. It may be understood that "On" in FIG. 7 represents an On state or the element 1 in the preamble sequence, and "Off" in FIG. 7 represents an Off state or the element 0 in the preamble sequence.

In a possible implementation, after the first communication apparatus (for example, the AP or the STA) sends the AMP PPDU, the second communication apparatus (for example, the STA or the AP) receives and processes the AMP PPDU. For example, the second communication apparatus may determine, in a power detection manner, whether a signal is received; and if receiving the signal, may determine, based on duration (for example, 2 µs) of each symbol, whether this symbol is 1 or 0. The second communication apparatus may perform a correlation operation on a local sequence of the receive end and a determined sequence, and then determine a received sequence based on polarity (that is, positive or negative) and a quantity of peaks that are obtained after the correlation operation. For another example, the second communication apparatus may determine, in a power detection manner, whether a signal is received; and if receiving the signal, may convert, based on a quantity of sampling points of each symbol of the receive end (herein, the second communication apparatus), a local sequence of the receive end into a sequence corresponding to the quantity of the sampling points of the receive end. For example, if the quantity of the sampling points of each symbol of the receive end is 2, each element in the local sequence of the receive end is repeated twice. Assuming that the local sequence of the receive end is [1 -1 1 -1 -1 1 1 -1 -1 -1 1 -1 -1 1 1 1], a converted local sequence is [1 1 -1 -1 1 1 -1 -1 -1 -1 1 1 1 1 -1 -1 -1 -1 -1 -1 1 1 -1 -1 -1 -1 1 1 1 1 1 1]. Then, a correlation operation is performed on the converted local sequence and a sequence obtained after sampling is performed on the received signal, and then the received sequence may be determined based on polarity (that is, positive or negative) and a quantity of peaks that are obtained after the correlation operation.

In a possible implementation, the local sequence may be used to perform a correlation operation on the sequence determined by the receive end, to determine a finally received sequence. The local sequence (denoted as L for ease of description) of the receive end may be constructed by using a base sequence (denoted as Wₐₘₚ for ease of description). For example, the local sequence L of the receive end may meet L=2*Wₐₘₚ-1, L=1-2*Wₐₘₚ, or L=Wₐₘₚ. Certainly, the local sequence L of the receive end may alternatively be in another form. This is not limited in this embodiment of this application. A maximum value of a cross-correlation between the local sequence L of the receive end and the sequence used by the WUR-Sync field is less than or equal to a preset value. For example, the preset value is related to the length of the base sequence. For example, when the length of the base sequence is any one of 16, 24, 32, or 40, the preset value may be 5. For another example, when the length of the base sequence is any one of 42, 44, 46, 48, 50, 52, 54, 58, 60, 62, or 64, the preset value may be 8. For another example, when the length of the base sequence is 56, the preset value may be 9. In this embodiment of this application, the maximum value of the cross-correlation between the local sequence that is of the receive end and that is constructed based on the base sequence and the sequence used by the WUR-Sync field is restricted to be less than or equal to a value, so that the receive end distinguishes between the AMP PPDU and the WUR PPDU based on the received preamble sequence, and the receive end can discover a type of a PPDU as early as possible, thereby reducing power consumption of the receive end.

In a possible implementation, a ratio of a maximum value to a second maximum value of absolute values of the cross-correlation between the local sequence L of the receive end and the base sequence Wₐₘₚ may be greater than or equal to a third value. The third value may be related to the length of the base sequence. For example, when the length of the base sequence is 16, the third value may be equal to 4; when the length of the base sequence is 32, the third value may be equal to (16/3); when the length of the base sequence is 48, the third value may be equal to (24/5); or when the length of the base sequence is 64, the third value may be equal to (32/7). For ease of description, the "ratio of the maximum value to the second maximum value of the absolute values of the cross-correlation" is referred to as a "peak-to-sidelobe ratio" in the following. In this embodiment of this application, the "peak-to-sidelobe ratio" between the base sequence and the local sequence of the receive end is restricted to be greater than or equal to a value, so that the receive end can more easily detect a signal peak, thereby improving synchronization performance.

The following describes, by using an example, a design principle of a preamble sequence, a base sequence, and a sequence that are designed in an embodiment of this application.

In a possible implementation, an AMP PPDU is designed based on a WUR PPDU. Similarly, a preamble sequence carried in a synchronization field in the AMP PPDU may be designed with reference to a sequence used by a WUR-Sync field. It may be learned based on the foregoing sequence used by the WUR-Sync field that the sequence used by the WUR-Sync field has the following characteristics:
1. The WUR-Sync field is modulated through OOK, and a sequence W corresponding to the WUR-Sync field includes only an element 0 and an element 1.
2. At a receive end, a local sequence L of WUR is L=2*W-1. Therefore, elements of the local sequence include only -1 and 1. The element -1 in the local sequence L corresponds to the element 0 in the sequence W, and the element 1 in the local sequence L corresponds to the element 1 in the sequence W.
3. The sequence used by the WUR-Sync field is obtained after the sequence W is transformed (for example, a repetition or element complement operation).
4. The sequence W has a same quantity of elements 0 and 1. In this way, when correlation is performed with the local sequence, amplitudes of a positive peak and a negative peak may be the same.

In this embodiment of this application, the preamble sequence carried in the synchronization field of the AMP PPDU may consist of a same sequence transformed one or more times (for ease of description, in this embodiment of this application, this sequence is referred to as a base sequence, and is represented by using Wₐₘₚ, and details are not described below). In addition, for ease of description, in this embodiment of this application, one or more transformations are represented by an outer-layer sequence. An element 1 in the outer-layer sequence indicates that the base sequence Wₐₘₚ is repeated once. An element -1 indicates that an element 1 in the base sequence Wₐₘₚ is changed to an element 0, and an element 0 therein is changed to an element 1. In other words, the element -1 in the outer-layer sequence indicates a complement of an element in the base sequence Wₐₘₚ. Details are not described below.

Based on the characteristics of the sequence used by the WUR-Sync field, design of the preamble sequence in the AMP PPDU has the following considerations:
1. An autocorrelation peak-to-sidelobe ratio of the base sequence needs to be high, for example, greater than or equal to a third value. In this way, a signal peak can be detected more easily at the receive end, thereby improving synchronization performance.
2. A cross-correlation between the local sequence L (L=2*Wₐₘₚ-1, or L=1-2*Wₐₘₚ, or L=Wₐₘₚ) constructed based on the base sequence and the sequence used by the WUR-Sync field needs to be low. For example, if a maximum cross-correlation value is less than or equal to a preset value, it indicates that a base sequence of AMP is different from a base sequence in WUR. In this way, it is easier to distinguish between the AMP PPDU and the WUR PPDU, so that the receive end can discover a type of a PPDU as early as possible, thereby reducing power consumption of the receive end (for example, an AMP device).
3. When detecting a signal, the receive end starts to perform a correlation operation. However, a start part of the AMP PPDU shown in FIG. 3 is a preamble for backward compatibility, namely, a legacy preamble (legacy preamble). At the receive end, the legacy preamble is determined as an On symbol, namely 1, by an OOK receiver. In this case, when the preamble sequence is designed, impact of adding several 1s before the preamble sequence on performance is considered. For example, if duration of one symbol is 2 microseconds, duration of the legacy preamble is 28 microseconds. In this case, a maximum of 14 "1"s are considered as a prefix.
4. A same quantity of elements 0 and 1 exists in the base sequence, and a quantity of consecutive 0s is less than or equal to a first value. For example, the first value is 3. Considering that a larger quantity of consecutive 0s indicates longer duration of an Off symbol and a higher probability of out-of-synchronization of the OOK receiver, in this embodiment of this application, the quantity of consecutive 0s in the base sequence is restricted to not exceed a specific value, so that a probability of out-of-synchronization of the OOK receiver can be reduced.
5. The outer-layer sequence includes an element 1 and an element -1. As described above, the element 1 in the outer-layer sequence indicates that the base sequence is repeated once, and the element -1 in the outer-layer sequence indicates the complement of the element in the base sequence (that is, the element 1 is changed to the element 0, and the element 0 is changed to the element 1).
6. A Hamming distance among outer-layer sequences with a same length needs to be large, so that preamble sequences with a same length can be more easily distinguished at the receive end.

Based on the foregoing design considerations of the preamble sequence, a possible base sequence construction method is as follows: A known sequence with a close length (for example, an m-sequence or a Legendre sequence) is selected based on a sequence length, and a base sequence with a corresponding length may be obtained by adding or deleting elements in the known sequence. It may be understood that a construction method varies with a selected known sequence. For example, as shown in the following Table 1, Table 1 shows methods for constructing base sequences with lengths of 16, 32, 48, and 64. It may be understood that the base sequence and the outer-layer sequence provided in this specification are merely examples, and any sequence that meets at least one of the foregoing design considerations of the preamble sequence falls within the protection scope of the embodiments of this application.

**Table 1**

| Length of a base sequence | Base sequence Wₐₘₚ | Known sequence | Construction method |
|---|---|---|---|
| 16 | 1010011000100111 | For an m-sequence with a length of 15, a primitive polynomial is x⁴+x+1, an initial state is [1 0 0 0], and cyclically shifting by 8 bits is performed, to obtain a sequence s=101011001000111 | Delete one element in s and add two elements 0, to obtain |
| | | | Wₐₘₚ=[s(1:3), 0, s(4:8), 0, s(9:11), s(13:15)]. |
| 32 | 1010011100101011 1000100110110100 | Set a base sequence with a length of 16 to y, | Set s[8]=1, separately add 1 and 0, and delete last two elements, to obtain |
| | | y=1010011000100111, and cyclically shift y by 9 bits to obtain | Wₐₘₚ=[s(1:12), 1, s(13:24), 0, s(25:30)]. |
| | | y'=0001001111010011, to obtain a sequence s=[y y']. | |
| 48 | 1011010110001010 1000010111010001 1110011100101001 | Set a Legendre sequence with a length of 43 to s | Set s[17]=1 and s[31]=0, and add 01010 to obtain |
| | | | Wₐₘₚ=[s(1:13), 0, 1, 0, 1, 0, s(14:43)]. |
| 64 | 1010001010110110 0010000110001011 0110011110111001 0010100100111101 | Set a Legendre sequence with a length of 59 to s | Set s[29]=1 and s[33]=0, and add 01001 to obtain |
| | | | Wₐₘₚ=[s(1:54), 0, 1, 0, 0, 1, s(55:59)]. |

It may be understood that s(i:j) in Table 1 represents an ith element to a jth element in the sequence s. A same expression in the following indicates a same meaning. Details are not described again. For example, in Table 1, s(1:3) in a first row and a fourth column indicates a first element to a third element in the sequence s, namely, 101. For another example, in Table 1, s(9:11) in the first row and the fourth column indicates a ninth element to an eleventh element in the sequence s, namely, 100. For still another example, in Table 1, s(1:12) in a second row and a fourth column represents a first element to a twelfth element in the sequence s, namely, 101001100010.

Based on the foregoing design considerations of the preamble sequence, when the length of the base sequence is 16, the outer-layer sequence (or a relationship between the base sequence and the preamble sequence) and performance of the base sequence are shown in the following Table 2. Wₐₘₚ represents a base sequence, the local sequence of the receive end L=2*Wₐₘₚ-1, and A and B respectively represent sequences used by WUR-Sync fields of WUR LDR and WUR HDR, and are prefixed with 1s of different lengths. 〈L, A〉 represents a maximum value of a cross-correlation between the local sequence L and a sequence A, and 〈L, B〉 represents a maximum value of a cross-correlation between the local sequence L and a sequence B. The "peak-to-sidelobe ratio" may represent a ratio of a maximum value to a second maximum value of absolute values of a cross-correlation between the local sequence L of the receive end and the base sequence Wₐₘₚ. A same expression in the following indicates a same meaning. Details are not described again.

**Table 2**

| Base sequence Wₐₘₚ | Quantity of 1s in a prefix during performing a correlation | Type | Outer-layer sequence | Performance |
|---|---|---|---|---|
| 1010011000100111 | 0 | Type 1 | Select one from the following sequences: [-1], [1 -1], [-1 1 -1], [1 -1 1 -1]. | 〈*L*, *A*〉 = 3, 〈*L*, *B*〉 = 3 |
| | | | | Peak-to-sidelobe ratio: 8/3≈2.67 |
| | | Type 2 | Select one from the following four groups: {[1], [-1]}, {[1 -1], [-1 1]}, {[1 -1 1], [-1 1 -1]}, {[-1 1 -1 1], [1 -1 1 -1]}. | Maximum values of cross-correlations between the local sequence L and sequences in four sequence sets are 3 |
| | | Type 3 | Select one from the following two groups: {[1], [-1,-1], [1, 1, 1], [-1, -1, -1, -1]}, {[-1], [1, 1], [-1, -1, -1], [1, 1, 1, 1]}. | Maximum values of cross-correlations between the local sequence L and sequences in two sequence sets are 4 |
| | | Type 4 | Select a subset from the following sequence: [1], [-1], [1 -1], [-1 1], [1 -1 1], [-1 1 -1], [1 -1 1 -1], [-1 1 -1 1]. | A maximum value of cross-correlations between the local sequence L and all sequences is 3 |
| 1001001111010100 | 2 | Type 1 | Select one from the following sequences: all 30 sequences with lengths of 1 to 4 consisting of an element 1 and an element -1. | 〈*L*, *A*〉 = 4, 〈*L*, *B*〉 = 4 |
| | | | | Peak-to-sidelobe ratio: 8/2= 4 |
| | | Type 2 | Select one from the following four groups: {[1], [-1]}, {[1 -1], [-1 1]}, {[1 -1 1], [-1 1 -1]}, {[-1 1 -1 1], [1 -1 1 -1]}. | Maximum values of cross-correlations between the local sequence L and sequences in four sequence sets are 2 |
| | | Type 3 | Select one from the following two groups: {[1], [-1,-1], [1, 1, 1], [-1, -1, -1, -1]}, {[-1], [1, 1], [-1, -1, -1], [1, 1, 1, 1]}. | Maximum values of cross-correlations between the local sequence L and sequences in two sequence sets are 2 |
| | | Type 4 | Select a subset from the following sequence: all 30 sequences with lengths of 1 to 4 consisting of an element 1 and an element -1. | A maximum value of cross-correlations between the local sequence L and all sequences is 2 |
| 1100001100101011 | 4 | Type 1 | Select one from the following sequences: [1], [1 1], [1 1 1], [1 1 1 1], [1 -1], [1 1 -1], [1-1 1], [1 -1 -1], [1 1 1 -1], [1 1 -1 1], [1 1 -1 -1], [1 -1 1 1], [1 -1 1 -1], [1 -1 -1 1], [1 -1 -1 -1]. | 〈*L*, *A*〉 = 4, 〈*L*, *B*〉 = 4 |
| | | | | Peak-to-sidelobe ratio: 8/2= 4 |
| | | Type 2 | Select one from the following four groups: {[1], [-1]}, {[1 -1], [-1 1]}, {[1 -1 1], [-1 1 -1]}, {[-1 1 -1 1], [1 -1 1 -1]}. | Maximum values of cross-correlations between the local sequence L and sequences in four sequence sets are 4 |
| | | Type 3 | Select one from the following two groups: {[1], [-1,-1], [1, 1, 1], [-1, -1, -1, -1]}, {[-1], [1, 1], [-1, -1, -1], [1, 1, 1, 1]}. | Maximum values of cross-correlations between the local sequence L and sequences in two sequence sets are 4 |
| | | Type 4 | Select a subset from the following sequence: all 30 sequences with lengths of 1 to 4 consisting of an element 1 and an element -1. | A maximum value of cross-correlations between the local sequence L and all sequences is 4 |
| 1010011000100111 | 6, 8, 10, 12, 14 | Type 1 | Select one from the following sequences: [1], [-1], [1 -1], [-1 1], [1 -1 1], [-1 1 -1], [1 -1 1 -1], [-1 1 -1 1]. | 〈*L*, *A*〉 = 3, 〈*L*, *B*〉 = 3 |
| | | | | Peak-to-sidelobe ratio: 8/3≈2.67 |
| | | Type 2 | Select one from the following four groups: {[1], [-1]}, {[1 -1], [-1 1]}, {[1 -1 1], [-1 1 -1]}, {[-1 1 -1 1], [1 -1 1 -1]}. | Maximum values of cross-correlations between the local sequence L and sequences in four sequence sets are 3 |
| | | Type 3 | Select one from the following two groups: {[1], [-1,-1], [1, 1, 1], [-1, -1, -1, -1]}, {[-1], [1, 1], [-1, -1, -1], [1, 1, 1, 1]}. | Maximum values of cross-correlations between the local sequence L and sequences in two sequence sets are 4 |
| | | Type 4 | Select a subset from the following sequence: [1], [-1], [1 -1], [-1 1], [1 -1 1], [-1 1 -1], [1 -1 1 -1], [-1 1 -1 1]. | A maximum value of cross-correlations between the local sequence L and all sequences is 3 |

As shown in Table 2, all the 30 sequences with lengths of 1 to 4 consisting of an element 1 and an element -1 are respectively: [1], [-1], [1 1], [1 -1], [-1 1], [-1 -1], [1 1 1], [1 -1 1], [1 - 1 -1], [-1 1 1], [-1 1 -1], [-1 -1 1], [-1 -1 -1], [1 1 -1], [1 1 1 1], [1 1 1 -1], [1 -1 1 1], [-1 1 1 1], [1 1 -1 1], [1 1 -1 -1], [1 -1 1 -1], [-1 1 -1 1], [1 -1 -1 1], [1 -1 -1 -1], [-1 -1 1 1], [-1 1 -1 -1], [-1 -1 -1 1], [1 -1 -1 -1], [-1 -1 1 -1], [-1 -1 -1 -1]. Details are not described below.

For example, the outer-layer sequence [-1] indicates that a preamble sequence is a complement of elements of the base sequence (that is, an element 0 is changed to an element 1, and an element 1 is changed to an element 0), and the outer-layer sequence [1] indicates that a preamble sequence is the base sequence repeated once. The outer-layer sequence [1 1] indicates that a preamble sequence is the base sequence repeated twice. The outer-layer sequence [1 -1] indicates that a preamble sequence is a sequence consisting of the base sequence repeated once and a complement of elements of the base sequence. The outer-layer sequence [-1 1 -1] indicates that a preamble sequence is a sequence consisting of a complement of elements of the base sequence, the base sequence repeated once, and the complement of the elements in the base sequence. The outer-layer sequence [-1 -1 1 -1] indicates that a preamble sequence is a sequence consisting of "a complement of elements of the base sequence" repeated twice, the base sequence repeated once, and the complement of the elements in the base sequence. Due to space limitations, this is not listed one by one herein.

It may be understood that another expression manner of the preamble sequence is as follows: Assuming that a sequence obtained after the element in the base sequence Wₐₘₚ is complemented is represented as *W̅ₐₘₚ*, the preamble sequence may be represented as various combinations of Wₐₘₚ and *W̅ₐₘₚ*. For example, when the outer-layer sequence is [-1], a preamble sequence may be represented as [*W̅ₐₘₚ*]. When the outer-layer sequence is [1], a preamble sequence may be represented as [Wₐₘₚ]. When the outer-layer sequence is [-1 1 -1], a preamble sequence may be represented as [*^{W}ₐₘₚ*, Wₐₘₚ, *W̅ₐₘₚ*]. When the outer-layer sequence is [-1 -1 1 -1], a preamble sequence may be represented as [*W̅ₐₘₚ*, *W̅ₐₘₚ*, Wₐₘₚ, *W̅ₐₘₚ*]. Due to space limitations, this is not listed one by one herein.

It may be understood that the outer-layer sequence in Table 2 is merely an example. In actual application, there may be more manners in which the base sequence forms the preamble sequence, that is, a length of the outer-layer sequence may be longer, for example, greater than 4.

In a possible implementation, when there are a plurality of predefined preamble sequences (or there are a plurality of outer-layer sequences), different preamble sequences may be used to carry control information. Therefore, the type 1 in Table 2 may indicate that no preamble sequence is used to carry the control information. The type 2 may indicate that N preamble sequences (or outer-layer sequences) with a same length may carry control information of $\left⌊log2\left(N\right)\right⌋$ bits, where └ ┘ indicates rounding down. The type 3 may indicate M preamble sequences (or outer-layer sequences) with different lengths carry control information of $\left⌊log2\left(M\right)\right⌋$ bits. The type 4 may indicate T different preamble sequences (or outer-layer sequences) may carry control information of $\left⌊log2\left(T\right)\right⌋$ bits. Details are not described below again. For descriptions of the control information, refer to the foregoing description. Details are not described herein again. For example, a Hamming distance among the N preamble sequences with the same length is greater than or equal to a second value. For example, in the type 2, the second value is equal to a length of the preamble sequence.

For example, when the length of the base sequence is 24, the outer-layer sequence (or the relationship between the base sequence and the preamble sequence) and the performance of the base sequence are shown in the following Table 3.

**Table 3**

| Base sequence Wₐₘₚ | Quantity of 1s in a prefix during performing a correlation | Type | Outer-layer sequence | Performance |
|---|---|---|---|---|
| 10001010011111101 0000110 | 0 | Type 1 | Select one from the following sequences: [1]. | 〈*L, A*〉 *=* 4, 〈*L, B*〉 *=* 4 |
| | | | | Peak-to-sidelobe ratio: 16/2=8 |
| | | Type 2 | Select one from the following four groups: {[1], [-1]}, {[1 -1], [-1 1]}, {[1 -1 1], [-1 1 -1]}, {[-1 1 -1 1, [1 -1 1 -1]}. | Maximum values of cross-correlations between the local sequence L and sequences in four sequence sets are 4 |
| | | Type 3 | Select one from the following two groups: {[1], [-1-1], [1 1 1], [-1 -1 -1 -1]}, {[-1], [1 1], [-1 -1 -1], [1 1 1 1]}. | Maximum values of cross-correlations between the local sequence L and sequences in two sequence sets are 4 |
| | | Type 4 | Select a subset from the following sequence: all 30 sequences with lengths of 1 to 4 consisting of an element 1 and an element -1. | A maximum value of cross-correlations between the local sequence L and all sequences is 4 |
| 10001101010001110 1101100 | 2 | Type 1 | Select one from the following sequences: [1], [-1], [1 -1], [-1 1], [1 -1 1], [-1 1 -1], [1 -1 1 -1], [-1 1 -1 1]. | 〈*L*, *A*〉 = 4, 〈*L*, *B*〉 = 4 |
| | | | | Peak-to-sidelobe ratio: 12/3=4 |
| | | Type 2 | Select one from the following four groups: {[1], [-1]}, {[1 -1], [-1 1]}, {[1 -1 1], [-1 1 -1]}, {[-1 1 -1 1], [1 -1 1 -1]}. | Maximum values of cross-correlations between the local sequence L and sequences in four sequence sets are 3 |
| | | Type 3 | Select one from the following two groups: {[1], [-1-1], [1 1 1], [-1 -1 -1 -1]}, {[-1], [1 1], [-1 -1 -1], [1 1 1 1]}. | Maximum values of cross-correlations between the local sequence L and sequences in two sequence sets are 4 |
| | | Type 4 | Select a subset from the following sequence: [1], [-1], [1 -1], [-1 1], [1 -1 1], [-1 1 -1], [1 -1 1 -1], [-1 1 -1 1]. | A maximum value of cross-correlations between the local sequence L and all sequences is 3 |
| 01101011000110001 0111010 | 4, 6, 8, 12, 14 | Type 1 | Select one from the following sequences: all 30 sequences with lengths of 1 to 4 consisting of an element 1 and an element -1. | 〈*L*, *A*〉 = 4, 〈*L*, *B*〉 = 4 |
| | | | | Peak-to-sidelobe ratio: 12/3=4 |
| | | Type 2 | Select one from the following four groups: {[1], [-1]}, {[1 -1], [-1 1]}, {[1 -1 1], [-1 1 -1]}, {[-1 1 -1 1], [1 -1 1 -1]}. | Maximum values of cross-correlations between the local sequence L and sequences in four sequence sets are 3 |
| | | Type 3 | Select one from the following two groups: {[1], [-1-1], [1 1 1], [-1 -1 -1 -1]}, {[-1], [1 1], [-1 -1 -1], [1 1 1 1]}. | Maximum values of cross-correlations between the local sequence L and sequences in two sequence sets are 3 |
| | | Type 4 | Select a subset from the following sequence: all 30 sequences with lengths of 1 to 4 consisting of an element 1 and an element -1. | A maximum value of cross-correlations between the local sequence L and all sequences is 3 |
| 10010110011010100 0011011 | 10 | Type 1 | Select one from the following sequences: [1], [-1], [1 -1], [-1 1], [1 -1 1], [-1 1 -1], [1 -1 1 -1], [-1 1 -1 1]. | 〈*L*, *A*〉 = 4, 〈*L*, *B*〉 = 4 |
| | | | | Peak-to-sidelobe ratio: 12/3=4 |
| | | Type 2 | Select one from the following four groups: {[1], [-1]}, {[1 -1], [-1 1]}, {[1 -1 1], [-1 1 -1]}, {[-1 1 -1 1], [1 -1 1 -1]}. | Maximum values of cross-correlations between the local sequence L and sequences in four sequence sets are 3 |
| | | Type 3 | Select one from the following two groups: {[1], [-1-1], [1 1 1], [-1 -1 -1 -1]}, {[-1], [1 1], [-1 -1 -1], [1 1 1 1]}. | Maximum values of cross-correlations between the local sequence L and sequences in two sequence sets are 4 |
| | | Type 4 | Select a subset from the following sequence: all 30 sequences with lengths of 1 to 4 consisting of an element 1 and an element -1. | A maximum value of cross-correlations between the local sequence L and all sequences is 4 |

For example, when the length of the base sequence is 32, the outer-layer sequence (or the relationship between the base sequence and the preamble sequence) and the performance of the base sequence are shown in the following Table 4.

**Table 4**

| Base sequence Wₐₘₚ | Quantity of 1s in a prefix during performing a correlation | Type | Outer-layer sequence | Performance |
|---|---|---|---|---|
| 11101000010110010 011010110001101 | 0 | Type 1 | Select one from the following sequences: [1], [-1]. | 〈*L*, *A*〉 = 4, 〈*L*, *B*〉 = 4 Peak-to-sidelobe ratio: 16/3 |
| | | Type 2 | Select one from the following four groups: {[1], [-1]}, {[1 1], [-1-1]}, {[1 1 1], [-1 -1 -1]}, {[1 1 1 1], [-1 -1 -1 -1]}. | Maximum values of cross-correlations between the local sequence L and sequences in four sequence sets are 3, 4, 4, and 4 |
| | | Type 3 | Select one from the following two groups: {[1], [-1, -1], [1, 1, 1], [-1, -1, -1, -1]}, {[-1], [1, 1], [-1, -1, -1], [1, 1, 1, 1]}. | Maximum values of cross-correlations between the local sequence L and sequences in two sequence sets are 4 |
| | | Type 4 | Select a subset from the following sequence: [1], [-1], [1 1], [-1 -1], [1 1 1], [-1 -1-1], [1 1 1 1], [-1 -1 -1 -1]. | A maximum value of cross-correlations between the local sequence L and all sequences is 4 |
| 01010110010100011 111000111100100 | 2 | Type 1 | Select one from the following sequences: [1], [1 1], [-1 1], [1 1 1], [1 1 1 1], [1 -1 1], [-1 1 1], [-1 -1 1], [1 1 -1 1], [1-1 1 1], [1 -1 -1 1], [-1 1 1 1], [-1 1 -1 1], [-1 -1 1 1], [-1 -1 -1 1]. | 〈*L*, *A*〉 = 4, 〈*L*, *B*〉 = 4 Peak-to-sidelobe ratio: 16/4 |
| | | Type 2 | Select one from the following four groups: {[1], [-1]}, {[1 1], [-1-1]}, {[1 1 1], [-1 -1 -1]}, {[1 1 1 1], [-1 -1 -1-1]}. | Maximum values of cross-correlations between the local sequence L and sequences in four sequence sets are 5 |
| | | Type 3 | Select one from the following two groups: {[1], [-1, -1], [1, 1, 1], [-1, -1, -1, -1]}, {[-1], [1, 1], [-1, -1, -1], [1, 1, 1, 1]}. | Maximum values of cross-correlations between the local sequence L and sequences in two sequence sets are 5 |
| | | Type 4 | Select a subset from the following sequence: all 30 sequences with lengths of 1 to 4 consisting of an element 1 and an element -1. | A maximum value of cross-correlations between the local sequence L and all sequences is 5 |
| 01010101100101011 000011110110001 | 4 | Type 1 | Select one from the following sequences: [1], [1 1], [1 1 1], [1 1 1 1]. | 〈*L*, *A*〉 = 4, 〈*L*, *B*〉 = 4 Peak-to-sidelobe ratio: 16/4 |
| | | Type 2 | Select one from the following four groups: {[1], [-1]}, {[1 1], [-1-1]}, {[1 1 1], [-1 -1 -1]}, {[1 1 1 1], [-1 -1 -1-1]}. | Maximum values of cross-correlations between the local sequence L and sequences in four sequence sets are 5 |
| | | Type 3 | Select one from the following two groups: {[1], [-1, -1], [1, 1, 1], [-1, -1, -1, -1]}, {[-1], [1, 1], [-1, -1, -1], [1, 1, 1, 1]}. | Maximum values of cross-correlations between the local sequence L and sequences in two sequence sets are 5 |
| | | Type 4 | Select a subset from the following sequence: [1], [1 1], [1 1 1], [1 1 1 1], [-1], [-1 -1], [-1 -1 -1], [-1 -1 -1 -1]. | A maximum value of cross-correlations between the local sequence L and all sequences is 5 |
| 10101011010001001 111010001110100, or 01110001101100110 100011101010010 | 6 | Type 1 | Select one from the following sequences: [1], [1 1], [1 1 1], [1 1 1 1], [-1], [-1 -1], [-1 -1 -1], [-1 -1 -1 -1]. | 〈*L*, *A*〉 = 4, 〈*L*, *B*〉 = 4 Peak-to-sidelobe ratio: 16/4 |
| | | Type 2 | Select one from the following four groups: {[1], [-1]}, {[1 1], [-1-1]}, {[1 1 1], [-1 -1 -1]}, {[1 1 1 1], [-1 -1 -1-1]}. | Maximum values of cross-correlations between the local sequence L and sequences in four sequence sets are 4 |
| | | Type 3 | Select one from the following two groups: {[1], [-1, -1], [1, 1, 1], [-1, -1, -1, -1]}, {[-1], [1, 1], [-1, -1, -1], [1, 1, 1, 1]}. | Maximum values of cross-correlations between the local sequence L and sequences in two sequence sets are 4 |
| | | Type 4 | Select a subset from the following sequence: [1], [1 1], [1 1 1], [1 1 1 1], [-1], [-1 -1], [-1 -1 -1], [-1 -1 -1 -1]. | A maximum value of cross-correlations between the local sequence L and all sequences is 4 |
| 10010101101001110 010101110110000 | 8 | Type 1 | Select one from the following sequences: [1], [1 1], [-1 1], [1 1 1], [1 -1 1], [-1 1 1], [-1 -1 1], [1 1 -1 1], [1 -1 1 1], [1-1 -1 1], [-1 1 1 1], [-1 1 -1 1], [-1 -1 1 1], [-1 -1 -1 1], [1 1 1 1]. | 〈*L*, *A*〉 = 4, 〈*L*, *B*〉 = 4 Peak-to-sidelobe ratio: 16/4 |
| | | Type 2 | Select one from the following four groups: {[1], [-1]}, {[1 1], [-1-1]}, {[1 1 1], [-1 -1 -1]}, {[1 1 1 1], [-1 -1 -1 - 1]}. | Maximum values of cross-correlations between the local sequence L and sequences in four sequence sets are 5 |
| | | Type 3 | Select one from the following two groups: {[1], [-1, -1], [1, 1, 1], [-1, -1, -1, -1]}, {[-1], [1, 1], [-1, -1, -1], [1, 1, 1, 1]}. | Maximum values of cross-correlations between the local sequence L and sequences in two sequence sets are 5 |
| | | Type 4 | Select a subset from the following sequence: all 30 sequences with lengths of 1 to 4 consisting of an element 1 and an element -1. | A maximum value of cross-correlations between the local sequence L and all sequences is 5 |
| 01001110010101011 101000111001001, or 10001110101000110 010001110110110, or 01010100101110110 000101110001011 | 10 | Type 1 | Select one from the following sequences: [1], [1 1], [1 1 1], [1 1 1 1], [-1], [-1 -1], [-1 -1 -1], [-1 -1 -1 -1]. | 〈*L*, *A*〉 = 4, 〈*L*, *B*〉 = 4 Peak-to-sidelobe ratio: 16/4 |
| | | Type 2 | Select one from the following four groups: {[1], [-1]}, {[1 1], [-1-1]}, {[1 1 1], [-1 -1 -1]}, {[1 1 1 1], [-1 -1 -1-1]}. | Maximum values of cross-correlations between the local sequence L and sequences in four sequence sets are 4 |
| | | Type 3 | Select one from the following two groups: {[1], [-1, -1], [1, 1, 1], [-1, -1, -1, -1]}, {[-1], [1, 1], [-1, -1, -1], [1, 1, 1, 1]}. | Maximum values of cross-correlations between the local sequence L and sequences in two sequence sets are 4 |
| | | Type 4 | Select a subset from the following sequence: [1], [1 1], [1 1 1], [1 1 1 1], [-1], [-1 -1], [-1 -1 -1], [-1 -1 -1 -1]. | A maximum value of cross-correlations between the local sequence L and all sequences is 4 |
| 10100110011010001 111101001010001 | 12 | Type 1 | Select one from the following sequences: [1], [1 -1], [1 -1 1], [1-1 1 -1]. | 〈*L*, *A*〉 = 4, 〈*L*, *B*〉 = 4 Peak-to-sidelobe ratio: 16/3 |
| | | Type 2 | Select one from the following four groups: {[1], [-1]}, {[1 1], [-1-1]}, {[1 1 1], [-1 -1 -1]}, {[1 1 1 1], [-1 -1 -1-1]}. | Maximum values of cross-correlations between the local sequence L and sequences in four sequence sets are 4 |
| | | Type 3 | Select one from the following two groups: {[1], [-1, -1], [1, 1, 1], [-1, -1, -1, -1]}, {[-1], [1, 1], [-1, -1, -1], [1, 1, 1, 1]}. | Maximum values of cross-correlations between the local sequence L and sequences in two sequence sets are 4 |
| | | Type 4 | Select a subset from the following sequence: all 30 sequences with lengths of 1 to 4 consisting of an element 1 and an element -1. | A maximum value of cross-correlations between the local sequence L and all sequences is 4 |
| 10100111001010111 000100110110100 | 14 | Type 1 | Select one from the following sequences: [1], [1 -1 1]. | 〈*L*, *A*〉 = 4, 〈*L*, *B*〉 = 4 Peak-to-sidelobe ratio: 16/3 |
| | | Type 2 | Select one from the following four groups: {[1], [-1]}, {[1 1], [-1-1]}, {[1 1 1], [-1 -1 -1]}, {[1 1 1 1], [-1 -1 -1-1]}. | Maximum values of cross-correlations between the local sequence L and sequences in four sequence sets are 4 |
| | | Type 3 | Select one from the following two groups: {[1], [-1, -1], [1, 1, 1], [-1, -1, -1, -1]}, {[-1], [1, 1], [-1, -1, -1], [1, 1, 1, 1]}. | Maximum values of cross-correlations between the local sequence L and sequences in two sequence sets are 4 |
| | | Type 4 | Select a subset from the following sequence: all 30 sequences with lengths of 1 to 4 consisting of an element 1 and an element -1. | A maximum value of cross-correlations between the local sequence L and all sequences is 4 |

For example, when the length of the base sequence is 40, the outer-layer sequence (or the relationship between the base sequence and the preamble sequence) and the performance of the base sequence are shown in the following Table 5.

**Table 5**

| Base sequence Wₐₘₚ | Quantity of 1s in a prefix during performing a correlation | Type | Outer-layer sequence | Performance |
|---|---|---|---|---|
| 00110001101010 11110100010111 000101101100 or 10100011110001 01101100010001 110111010010 or 00111101001000 01001100111110 100011110010 or 01000111101000 11111010100100 011010011010 or 10001100101010 00111111001101 101000110001 or 11010101000010 01110011101100 101100001011 or 10110010100100 11001011111000 100101000111 | 0 | Type 1 | Select one from the following sequences: [1]. | 〈*L*,*A*〉 = 5, 〈*L*,*B*〉 = 4 |
| | | | | Peak-to-sidelobe ratio: 20/3 |
| | | Type 2 | Select one from the following four groups: {[1], [-1]}, {[1 1], [-1 -1]}, {[1 1 1], [-1 -1-1]}, {[1 1 1 1], [-1 -1 -1 -1]}. | Maximum values of cross-correlations between the local sequence L and sequences in four sequence sets are 4 |
| | | Type 3 | Select one from the following two groups: {[1], [-1, -1], [1, 1, 1], [-1, -1, -1,-1]}, {[-1], [1, 1], [-1,-1, -1], [1, 1, 1, 1]}. | Maximum values of cross-correlations between the local sequence L and sequences in two sequence sets are 4 |
| | | Type 4 | Select a subset from the following sequence: all 30 sequences with lengths of 1 to 4 consisting of an element 1 and an element -1. | A maximum value of cross-correlations between the local sequence L and all sequences is 4 |
| 00001110110011 11100101010100 110001100101 | 2 | Type 1 | Select one from the following sequences: all 30 sequences with lengths of 1 to 4 consisting of an element 1 and an element -1. | 〈*L*, *A*〉 = 5, 〈*L*, *B*〉 = 4 |
| | | | | Peak-to-sidelobe ratio: 20/4=5 |
| | | Type 2 | Select one from the following four groups: {[1], [-1]}, {[1 1], [-1 -1]}, {[1 1 1], [-1 -1-1]}, {[1 1 1 1], [-1 -1 -1 -1]}. | Maximum values of cross-correlations between the local sequence L and sequences in four sequence sets are 4 |
| | | Type 3 | Select one from the following two groups: {[1], [-1, -1], [1, 1, 1], [-1, -1, -1,-1]}, {[-1], [1, 1], [-1,-1, -1], [1, 1, 1, 1]}. | Maximum values of cross-correlations between the local sequence L and sequences in two sequence sets are 4 |
| | | Type 4 | Select a subset from the following sequence: all 30 sequences with lengths of 1 to 4 consisting of an element 1 and an element -1. | A maximum value of cross-correlations between the local sequence L and all sequences is 4 |
| 0110101010100011101011011000 011110001001 | 4 | Type 1 | Select one from the following sequences: [1], [1 1], [1 1 1], [1 1 1 1]. | 〈*L*, *A*〉 = 5, 〈*L*, *B*〉 = 4 Peak-to-sidelobe ratio: 20/4=5 |
| | | Type 2 | Select one from the following four groups: {[1], [-1]}, {[1 1], [-1 -1]}, {[1 1 1], [-1 -1-1]}, {[1 1 1 1], [-1 -1 -1 -1]}. | Maximum values of cross-correlations between the local sequence L and sequences in four sequence sets are 5 |
| | | Type 3 | Select one from the following two groups: {[1], [-1, -1], [1, 1, 1], [-1, -1, -1,-1]}, {[-1], [1, 1], [-1,-1, -1], [1, 1, 1, 1]}. | Maximum values of cross-correlations between the local sequence L and sequences in two sequence sets are 5 |
| | | Type 4 | Select a subset from the following sequence: all 30 sequences with lengths of 1 to 4 consisting of an element 1 and an element -1. | A maximum value of cross-correlations between the local sequence L and all sequences is 5 |
| 10001110110001 10010001111100 110101010010 or 11000011101010 10011011100100 101000010111 | 6 | Type 1 | Select one from the following sequences: [1], [1 1], [1 1 1], [1 1 1 1]. | 〈*L*,*A*〉 = 5, 〈*L*,*B*〉 = 4 |
| | | | | Peak-to-sidelobe ratio: 20/4=5 |
| | | Type 2 | Select one from the following four groups: {[1], [-1]}, {[1 1], [-1 -1]}, {[1 1 1], [-1 -1-1]}, {[1 1 1 1], [-1 -1 -1 -1]}. | Maximum values of cross-correlations between the local sequence L and sequences in four sequence sets are 5 |
| | | Type 3 | Select one from the following two groups: {[1], [-1, -1], [1, 1, 1], [-1, -1, -1,-1]}, {[-1], [1, 1], [-1,-1, -1], [1, 1, 1, 1]}. | Maximum values of cross-correlations between the local sequence L and sequences in two sequence sets are 5 |
| | | Type 4 | Select a subset from the following sequence: all 30 sequences with lengths of 1 to 4 consisting of an element 1 and an element -1. | A maximum value of cross-correlations between the local sequence L and all sequences is 5 |
| 10001101010101 10011001011100 010011110010 or 10011100110010 01011000111110 100001101010 or 01110010101010 01100110100011 101100001101 | 8 | Type 1 | Select one from the following sequences: [1], [1 1], [1 1 1], [1 1 1 1], [-1], [-1 -1], [-1 -1 -1], [-1 -1 -1 -1]. | 〈*L*,*A*〉 = 5, 〈*L*,*B*〉 = 4 |
| | | | | Peak-to-sidelobe ratio: 20/4=5 |
| | | Type 2 | Select one from the following four groups: {[1], [-1]}, {[1 1], [-1 -1]}, {[1 1 1], [-1 -1-1]}, {[1 1 1 1], [-1 -1-1 -1]}. | Maximum values of cross-correlations between the local sequence L and sequences in four sequence sets are 4 |
| | | Type 3 | Select one from the following two groups: {[1], [-1, -1], [1, 1, 1], [-1, -1, -1,-1]}, {[-1], [1, 1], [-1,-1, -1], [1, 1, 1, 1]}. | Maximum values of cross-correlations between the local sequence L and sequences in two sequence sets are 4 |
| | | Type 4 | Select a subset from the following sequence: [1], [1 1], [1 1 1], [1 1 1 1], [-1], [-1 -1], [-1 -1 -1], [-1 -1 -1 -1]. | A maximum value of cross-correlations between the local sequence L and all sequences is 4 |
| 01110010101010 01100110100011 101100001101 or 10001111010001 10010100011110 010100110110 or 10001101010101 10011001011100 010011110010 | 10 | Type 1 | Select one from the following sequences: [1], [1 1], [1 1 1], [1 1 1 1], [-1], [-1 -1], [-1 -1 -1], [-1 -1 -1 -1]. | 〈*L*,*A*〉 = 5, 〈*L*,*B*〉 = 4 |
| | | | | Peak-to-sidelobe ratio: 20/4=5 |
| | | Type 2 | Select one from the following four groups: {[1], [-1]}, {[1 1], [-1 -1]}, {[1 1 1], [-1 -1-1]}, {[1 1 1 1], [-1 -1 -1 -1]}. | Maximum values of cross-correlations between the local sequence L and sequences in four sequence sets are 4 |
| | | Type 3 | Select one from the following two groups: {[1], [-1, -1], [1, 1, 1], [-1, -1, -1,-1]}, {[-1], [1, 1], [-1,-1, -1], [1, 1, 1, 1]}. | Maximum values of cross-correlations between the local sequence L and sequences in two sequence sets are 4 |
| | | Type 4 | Select a subset from the following sequence: [1], [1 1], [1 1 1], [1 1 1 1], [-1], [-1 -1], [-1 -1 -1], [-1 -1 -1 -1]. | A maximum value of cross-correlations between the local sequence L and all sequences is 4 |
| 11000101100100 11110001010100 101001111010 or 00111010011011 00001110101011 010110000101 | 12 | Type 1 | Select one from the following sequences: all 30 sequences with lengths of 1 to 4 consisting of an element 1 and an element -1. | 〈*L*,*A*〉 = 5, 〈*L*,*B*〉 = 4 |
| | | | | Peak-to-sidelobe ratio: 20/4=5 |
| | | Type 2 | Select one from the following four groups: {[1], [-1]}, {[1 1], [-1 -1]}, {[1 1 1], [-1 -1-1]}, {[1 1 1 1], [-1 -1-1 -1]}. | Maximum values of cross-correlations between the local sequence L and sequences in four sequence sets are 4 |
| | | Type 3 | Select one from the following two groups: {[1], [-1, -1], [1, 1, 1], [-1, -1, -1,-1]}, {[-1], [1, 1], [-1,-1, -1], [1, 1, 1, 1]}. | Maximum values of cross-correlations between the local sequence L and sequences in two sequence sets are 4 |
| | | Type 4 | Select a subset from the following sequence: all 30 sequences with lengths of 1 to 4 consisting of an element 1 and an element -1. | A maximum value of cross-correlations between the local sequence L and all sequences is 4 |
| 10101010011010 01100001111110 001001010011 | 14 | Type 1 | Select one from the following sequences: [1], [1 1], [1 1 1], [1 1 1 1], [-1], [-1 -1], [-1 -1 -1], [-1 -1 -1 -1]. | 〈*L*, *A*〉 = 5, 〈*L*, *B*〉 = 4 |
| | | | | Peak-to-sidelobe ratio: 20/4=5 |
| | | Type 2 | Select one from the following four groups: {[1], [-1]}, {[1 1], [-1 -1]}, {[1 1 1], [-1 -1-1]}, {[1 1 1 1], [-1 -1 -1 -1]}. | Maximum values of cross-correlations between the local sequence L and sequences in four sequence sets are 4 |
| | | Type 3 | Select one from the following two groups: {[1], [-1, -1], [1, 1, 1], [-1, -1, -1,-1]}, {[-1], [1, 1], [-1,-1, -1], [1, 1, 1, 1]}. | Maximum values of cross-correlations between the local sequence L and sequences in two sequence sets are 4 |
| | | Type 4 | Select a subset from the following sequence: [1], [1 1], [1 1 1], [1 1 1 1], [-1], [-1 -1], [-1 -1 -1], [-1 -1 -1 -1]. | A maximum value of cross-correlations between the local sequence L and all sequences is 4 |

In a possible implementation, in addition to the methods for constructing base sequences with lengths of 16, 32, 48, and 64 shown in Table 1, this embodiment of this application further provides methods for constructing base sequences with lengths of 42, 44, 46, 48, 50, 52, 54, 56, 58, 60, 62, and 64. As shown in the following Table 6, Table 6 shows methods for constructing base sequences with different lengths and performance of cross-correlations of local sequences L consisting of these base sequences and the sequence used by the WUR-Sync field when there is no prefix. A and B respectively represent sequences used by WUR-Sync fields of WUR LDR and WUR HDR. 〈L, A〉 represents a maximum value of a cross-correlation between the local sequence L and a sequence A, and 〈L, B〉 represents a maximum value of a cross-correlation between the local sequence L and a sequence B. max(x₁, x₂) indicates maximum values of x₁ and x₂.

**Table 6**

| Length of a base sequence | Base sequence Wₐₘₚ | Known sequence | Construction method | Performance |
|---|---|---|---|---|
| 42 | 100100110001111101 01001010111110000 1100100 | Set s to a Legendre sequence with a length of 41 | Add one element 0, Wₐₘₚ=[s(1:8), 0, s(9:41)] | Max(〈*L*, *A*〉, 〈*L*, *B*〉)=7 |
| | | | | Peak-to-sidelobe ratio: 21/4 |
| 44 | 10110101100010001 011101000111100011 100101001 | Set s to a Legendre sequence with a length of 43 | Add one element 0, and set s[17]=1 and s[31]=0, Wₐₘₚ=[s(1:30), 0, s(31:43)] | Max(〈*L*, *A*〉, 〈*L*, *B*〉) = 8 |
| | | | | Peak-to-sidelobe ratio: 22/5 |
| 46 | 10110101001100010 001011101000111100 11100101001 | Set s to a Legendre sequence with a length of 43 | Add 001, and set s[17]=1 and s[31]=0, Wₐₘₚ=[s(1:8), 0, 0, 1, s(9:43)] | Max(〈*L, A*〉, 〈*L, B*〉)=7 |
| | | | | Peak-to-sidelobe ratio: 23/5 |
| 48 | 10110100101011000 100010111010001111 0011100101001 | Set s to a Legendre sequence with a length of 43 | Add 01010, and set s[17]=1 and s[31]=0, Wₐₘₚ=[s(1:7),0, 1, 0, 1, 0, s(8:43)] | Max(〈*L, A*〉, 〈*L, B*〉)= 7 |
| | | | | Peak-to-sidelobe ratio: 24/5 |
| 50 | 00110100100010100 011111100110011111 100010010010110 | Set s to a Legendre sequence with a length of 53 | Delete three elements, and set s[1]=0, Wₐₘₚ=[s(1:40), s(44:53)] | Max(〈*L, A*〉, 〈*L, B*〉) *=* 8 |
| | | | | Peak-to-sidelobe ratio: 25/6 |
| 52 | 10110100100010100 011111001100111111 00010100010010110 | Set s to a Legendre sequence with a length of 53 | Delete one element, Wₐₘₚ=[s(1:23), s(25:53)] | Max(〈*L, A*〉, 〈*L, B*〉) *=* 8 |
| | | | | Peak-to-sidelobe ratio: 26/6 |
| 54 | 10110100100010100 011111010011001111 11000101000100101 10 | Set s to a Legendre sequence with a length of 53 | Add one element 0, Wₐₘₚ=[s(1:23), 0, s(24:53)] | Max(〈*L, A*〉, 〈*L, B*〉) *=* 8 |
| | | | | Peak-to-sidelobe ratio: 27/5 |
| 56 | 10110100100010100 011111100110011111 01010001010001001 0110 | Set s to a Legendre sequence with a length of 53 | Add 010, Wₐₘₚ=[s(1:35), 0, 1, 0, s(36:53)] | Max(〈*L, A*〉, 〈*L, B*〉) = 9 |
| | | | | Peak-to-sidelobe ratio: 28/6 |
| 58 | 10110100100101000 101000111111001100 111111000101000100 10110 | Set s to a Legendre sequence with a length of 53 | Add 01010, Wₐₘₚ=[s(1:10), 0, 1, 0, 1, 0, s(11:53)] | Max(〈*L, A*〉, 〈*L, B*〉) *=* 8 |
| | | | | Peak-to-sidelobe ratio: 29/6 |
| 60 | 10110100100010100 011110101010110011 001111110001010001 0010110 | Set s to a Legendre sequence with a length of 53 | Add 0101010, Wₐₘₚ=[s(1:10), 0, 1, 0, 1, 0, 1, 0, s(11:53)] | Max(〈*L, A*〉, 〈*L, B*〉) *=* 8 |
| | | | | Peak-to-sidelobe ratio: 30/6 |
| 62 | 10100011110010010 10100110100001000 101101110110101110 0011001110 | Set s as an m-sequence of a length of 63, where a primitive polynomial is x⁶+x⁵+x⁴+x+ 1, and an initial state is [1 0 0 0 0 0] | Delete one element, and set s[3]=1 and s[43]=0, Wₐₘₚ=[s(1:62)] | Max(〈*L, A*〉, 〈*L, B*〉) *=* 8 |
| | | | | Peak-to-sidelobe ratio: 31/6 |
| 64 | 10100010101101100 01000011000101101 100111101110010010 100100111101 | Set s as an m-sequence of a length of 63, where a primitive polynomial is x⁶+x⁵+x⁴+x+ 1, and an initial state is [1 0 0 0 0 0] | Add one element 0, and set s[4]=1 and s[43]=0, Wₐₘₚ=[s(1:47), 0, s(48:63)] | Max(〈*L*, *A*〉, 〈*L*, *B*〉) = 8 |
| | | | | Peak-to-sidelobe ratio: 32/7 |

It may be understood that the base sequences in Table 1 to Table 6 are merely examples. A person skilled in the art may understand that a standard may adopt a proper replacement of any base sequence from Table 1 to Table 6. For example, an element 0 in one or more base sequences in Table 1 to Table 6 is changed to an element 1, an element 1 is changed to an element 0, and performance thereof is unchanged.

It may be understood that, in actual application (or in a standard protocol), there may be no outer-layer sequence, but the preamble sequence is represented by describing a relationship between the base sequence and the preamble sequence. Therefore, in this embodiment of this application, a process of obtaining the preamble sequence based on the base sequence and the outer-layer sequence may alternatively be used to represent the preamble sequence by describing the relationship between the base sequence and the preamble sequence. For example, the preamble sequence is the base sequence repeated K times, or the preamble sequence is a complement of elements of the base sequence, or the preamble sequence is "the complement of the elements of the base sequence" repeated K times, or the preamble sequence is a sequence consisting of the base sequence and the complement of the elements of the base sequence, where K is a positive integer. Due to space limitations, this is not listed one by one herein. It may be further understood that, in actual application (or in the standard protocol), neither the outer-layer sequence nor the base sequence may exist. In embodiments of this application, for ease of description, the preamble sequence is understood as consisting of the base sequence and the outer-layer sequence. In actual application (for example, the standard protocol), only the preamble sequence may exist. In other words, in actual application, there may be only the preamble sequence used by the synchronization field of the AMP PPDU, and a process of constructing, generating, or inferring the preamble sequence does not exist. Therefore, in this embodiment of this application, the preamble sequence used by the synchronization field of the AMP PPDU may be any one of sequences obtained based on the base sequence and the outer-layer sequence in Table 1 to Table 6.

Considering that there may be only the preamble sequence in the standard protocol, the following describes content of the preamble sequence by using an example in this embodiment of this application.

In this embodiment of this application, the following factors are considered when the base sequence is selected:
(a) A missed detection probability: a probability that the receive end fails to correctly detect a target sequence when a received signal is from a target device. A smaller missed detection probability is better.
(b) A false alarm probability: a probability that the receive end incorrectly determines existence of a target sequence when a received signal is not from the target device. A smaller false alarm probability is better.
(c) Complexity: A longer sequence indicates higher complexity of a correlation operation.

In this embodiment of this application, a higher ratio of an autocorrelation main lobe of the base sequence to an absolute value of a maximum side lobe thereof indicates better performance of a cross-correlation between the local sequence constructed based on the base sequence and the sequence used by the WUR-Sync field, and a lower missed detection probability and a lower false alarm probability. A sequence with a longer length is easier to implement the foregoing performance. However, in consideration of complexity, under a compromise between performance and complexity, a base sequence with a length of 32 (for example, the base sequence is selected from Table 4) is selected to construct a preamble sequence. In addition, when detecting a signal, the receive end starts to perform a correlation operation. Therefore, the received signal includes a legacy preamble. At the receive end, the legacy preamble may be determined as an On symbol, namely 1, by the OOK receiver. For example, if duration of one symbol is 2 microseconds, duration of the legacy preamble is 28 microseconds. In this case, there are a maximum of 14 "1" s. In addition, considering that a specific power accumulation time is required in a process in which the receive end determines, through power detection, that there is a signal, a base sequence with a prefix of six "1"s is selected. In conclusion, a selected base sequence may be 10101011010001001111010001110100 or01110001101100110100011101010010.

In this embodiment of this application, when the outer-layer sequence is selected, it is mainly considered that a Hamming distance among outer-layer sequences with a same length needs to be large. When Hamming distances are the same, a combination is selected, in which other values other than a maximum value among absolute values of cross-correlations between the local sequence (for example, the local sequence L=2*Wₐₘₚ-1, or L=1-2*Wₐₘₚ) and the preamble sequence consisting of the outer-layer sequence and the base sequence are relatively small.

A corresponding preamble sequence may be obtained based on the foregoing principle of selecting the base sequence and the outer-layer sequence. For example, as shown in the following Table 7, Table 7 shows the content of the preamble sequence when the base sequence is 10101011010001001111010001110100.

**Table 7**

| Base sequence Wₐₘₚ | Outer-layer sequence | Preamble sequence |
|---|---|---|
| 1010101101000100 1111010001110100 | [1] | 1 0 1 0 1 0 1 1 0 1 0 0 0 1 0 0 1 1 1 1 0 1 0 0 0 1 1 1 0 1 0 0 |
| | [-1] | 0 1 0 1 0 1 0 0 1 0 1 1 1 0 1 1 0 0 0 0 1 0 1 1 1 0 0 0 1 0 1 1 |
| | [1 1] | 1 0 1 0 1 0 1 1 0 1 0 0 0 1 0 0 1 1 1 1 0 1 0 0 0 1 1 1 0 1 0 0 1 0 1 0 1 0 1 1 0 1 0 0 0 1 0 0 1 1 1 1 0 1 0 0 0 1 1 1 0 1 0 0 |
| | [-1 -1] | 0 1 0 1 0 1 0 0 1 0 1 1 1 0 1 1 0 0 0 0 1 0 1 1 1 0 0 0 1 0 1 1 0 1 0 1 0 1 0 0 1 0 1 1 1 0 1 1 0 0 0 0 1 0 1 1 1 0 0 0 1 0 1 1 |
| | [1 1 1] | 1 0 1 0 1 0 1 1 0 1 0 0 0 1 0 0 1 1 1 1 0 1 0 0 0 1 1 1 0 1 0 0 1 0 1 0 1 0 1 1 0 1 0 0 0 1 0 0 1 1 1 1 0 1 0 0 0 1 1 1 0 1 0 0 1 0 1 0 1 0 1 1 0 1 0 0 0 1 0 0 1 1 1 1 0 1 0 0 0 1 1 1 0 1 0 0 |
| | [-1 -1 -1] | 0 1 0 1 0 1 0 0 1 0 1 1 1 0 1 1 0 0 0 0 1 0 1 1 1 0 0 0 1 0 1 1 0 1 0 1 0 1 0 0 1 0 1 1 1 0 1 1 0 0 0 0 1 0 1 1 1 0 0 0 1 0 1 1 0 1 0 1 0 1 0 0 1 0 1 1 1 0 1 1 0 0 0 0 1 0 1 1 1 0 0 0 1 0 1 1 |
| | [1 1 1 1] | 1 0 1 0 1 0 1 1 0 1 0 0 0 1 0 0 1 1 1 1 0 1 0 0 0 1 1 1 0 1 0 0 1 0 1 0 1 0 1 1 0 1 0 0 0 1 0 0 1 1 1 1 0 1 0 0 0 1 1 1 0 1 0 0 1 0 1 0 1 0 1 1 0 1 0 0 0 1 0 0 1 1 1 1 0 1 0 0 0 1 1 1 0 1 0 0 1 0 1 0 1 0 1 1 0 1 0 0 0 1 0 0 1 1 1 1 0 1 0 0 0 1 1 1 0 1 0 0 |
| | [-1 -1 -1-1] | 0 1 0 1 0 1 0 0 1 0 1 1 1 0 1 1 0 0 0 0 1 0 1 1 1 0 0 0 1 0 1 1 0 1 0 1 0 1 0 0 1 0 1 1 1 0 1 1 0 0 0 0 1 0 1 1 1 0 0 0 1 0 1 1 0 1 0 1 0 1 0 0 1 0 1 1 1 0 1 1 0 0 0 0 1 0 1 1 1 0 0 0 1 0 1 1 0 1 0 1 0 1 0 0 1 0 1 1 1 0 1 1 0 0 0 0 1 0 1 1 1 0 0 0 1 0 1 1 |

For example, as shown in the following Table 8, Table 8 shows the content of the preamble sequence when the base sequence is 01110001101100110100011101010010.

**Table 8**

| Base sequence Wₐₘₚ | Outer-layer sequence | Preamble sequence |
|---|---|---|
| 0111000110110011 0100011101010010 | [1] | 0 1 1 1 0 0 0 1 1 0 1 1 0 0 1 1 0 1 0 0 0 1 1 1 0 1 0 1 0 0 1 0 |
| | [-1] | 1 0 0 0 1 1 1 0 0 1 0 0 1 1 0 0 1 0 1 1 1 0 0 0 1 0 1 0 1 1 0 1 |
| | [1 1] | 0 1 1 1 0 0 0 1 1 0 1 1 0 0 1 1 0 1 0 0 0 1 1 1 0 1 0 1 0 0 1 0 0 1 1 1 0 0 0 1 1 0 1 1 0 0 1 1 0 1 0 0 0 1 1 1 0 1 0 1 0 0 1 0 |
| | [-1 - 1] | 1 0 0 0 1 1 1 0 0 1 0 0 1 1 0 0 1 0 1 1 1 0 0 0 1 0 1 0 1 1 0 1 1 0 0 0 1 1 1 0 0 1 0 0 1 1 0 0 1 0 1 1 1 0 0 0 1 0 1 0 1 1 0 1 |
| | [1 1 1] | 0 1 1 1 0 0 0 1 1 0 1 1 0 0 1 1 0 1 0 0 0 1 1 1 0 1 0 1 0 0 1 0 0 1 1 1 0 0 0 1 1 0 1 1 0 0 1 1 0 1 0 0 0 1 1 1 0 1 0 1 0 0 1 0 0 1 1 1 0 0 0 1 1 0 1 1 0 0 1 1 0 1 0 0 0 1 1 1 0 1 0 1 0 0 1 0 |
| | [1 -1 -1] | 1 0 0 0 1 1 1 0 0 1 0 0 1 1 0 0 1 0 1 1 1 0 0 0 1 0 1 0 1 1 0 1 1 0 0 0 1 1 1 0 0 1 0 0 1 1 0 0 1 0 1 1 1 0 0 0 1 0 1 0 1 1 0 1 1 0 0 0 1 1 1 0 0 1 0 0 1 1 0 0 1 0 1 1 1 0 0 0 1 0 1 0 1 1 0 1 |
| | [1 1 1 1] | 0 1 1 1 0 0 0 1 1 0 1 1 0 0 1 1 0 1 0 0 0 1 1 1 0 1 0 1 0 0 1 0 0 1 1 1 0 0 0 1 1 0 1 1 0 0 1 1 0 1 0 0 0 1 1 1 0 1 0 1 0 0 1 0 0 1 1 1 0 0 0 1 1 0 1 1 0 0 1 1 0 1 0 0 0 1 1 1 0 1 0 1 0 0 1 0 0 1 1 1 0 0 0 1 1 0 1 1 0 0 1 1 0 1 0 0 0 1 1 1 0 1 0 1 0 0 1 0 |
| | [-1 -1 -1 - 1] | 1 0 0 0 1 1 1 0 0 1 0 0 1 1 0 0 1 0 1 1 1 0 0 0 1 0 1 0 1 1 0 1 1 0 0 0 1 1 1 0 0 1 0 0 1 1 0 0 1 0 1 1 1 0 0 0 1 0 1 0 1 1 0 1 1 0 0 0 1 1 1 0 0 1 0 0 1 1 0 0 1 0 1 1 1 0 0 0 1 0 1 0 1 1 0 1 1 0 0 0 1 1 1 0 0 1 0 0 1 1 0 0 1 0 1 1 1 0 0 0 1 0 1 0 1 1 0 1 |

The preamble sequences in Table 7 and Table 8 are merely examples. A person skilled in the art may understand that the standard may adopt a proper replacement of any preamble sequence from Table 7 and/or Table 8. For example, an element 0 in one or more preamble sequences in Table 7 and/or Table 8 is changed to an element 1, an element 1 is changed to an element 0, and performance thereof is unchanged.

In a possible implementation, the plurality of predefined preamble sequences in embodiments of this application may include one or more preamble sequences in Table 7 and/or Table 8. The preamble sequence used by the synchronization field in the AMP PPDU may be one of the plurality of predefined preamble sequences, for example, may be one in Table 7 or Table 8.

In embodiments of this application, the preamble sequence applicable to the AMP PPDU is designed with reference to the sequence used by the WUR-Sync field in the WUR PPDU. This can meet communication requirements between AMP devices for low complexity and low power, and further enable the AMP device serving as the receive end to accurately distinguish between the AMP PPDU and the WUR PPDU, so that the AMP device can discover the type of the PPDU as early as possible, thereby reducing power consumption of the AMP device. In addition, in embodiments of this application, the control information is further carried by using a plurality of different preamble sequences, so that signaling overheads can be reduced.

The foregoing content describes in detail the method provided in this application. To facilitate implementation of the foregoing solutions in embodiments of this application, embodiments of this application further provide a corresponding apparatus or device.

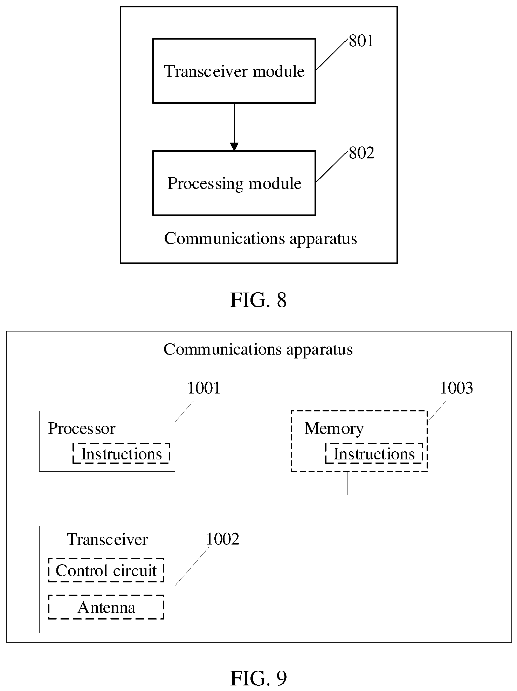

In this application, the communication apparatus is divided into functional modules based on the foregoing method embodiments. For example, each functional module may be divided to each corresponding function, or two or more functions may be integrated into one processing module. The integrated module may be implemented in a form of hardware, or may be implemented in a form of a software functional module. It should be noted that, in this application, module division is an example, and is merely a logical function division. In actual implementation, another division manner may be used. The following describes in detail a communication apparatus in embodiments of this application with reference to FIG. 8 to FIG. 10.

FIG. 8 is a diagram of a structure of a communication apparatus according to an embodiment of this application. As shown in FIG. 8, the communication apparatus includes a transceiver module 801 and a processing module 802. The transceiver module 801 may implement a corresponding communication function. The processing module 802 is configured to process data. For example, the transceiver module 801 may also be referred to as an interface, a communication interface, a communication module, or the like.

In some embodiments of this application, the communication apparatus may be the first communication apparatus shown above. To be specific, the communication apparatus shown in FIG. 8 may be configured to perform steps, functions, or the like performed by the first communication apparatus in the foregoing method embodiments. For example, the communication apparatus may be the first communication apparatus or a chip, a functional module, or the like disposed in the first communication apparatus. This is not limited in embodiments of this application. The transceiver module 801 is configured to perform a receiving/sending-related operation of the first communication apparatus in the foregoing method embodiments, and the processing module 802 is configured to perform a processing-related operation of the first communication apparatus in the foregoing method embodiments.

For example, the processing module 802 is configured to generate a PPDU, and the PPDU includes a preamble sequence; and the transceiver module 801 is configured to send the PPDU.

It may be understood that the transceiver module 801 may send the PPDU to another communication apparatus, or the transceiver module 801 outputs the PPDU from the processing module 802 to another component, another functional module, or the like in the first communication apparatus. Related descriptions of outputting other information by the transceiver module are similar. Details are not described below again.

In this embodiment of this application, for descriptions of the PPDU, the preamble sequence, and the like, refer to the descriptions in the foregoing method embodiments. Details are not described one by one herein again.

It may be understood that specific descriptions of the transceiver module and the processing module in embodiments of this application are merely examples. For specific functions, steps, or the like performed by the transceiver module and the processing module, refer to the foregoing method embodiments. Details are not described herein again. In addition, for a technical effect of this embodiment of this application, refer to the technical effect in the foregoing method embodiments. For brevity, details are not described herein again.

Still refer to FIG. 8. In some other embodiments of this application, the communication apparatus may be the second communication apparatus shown above. To be specific, the communication apparatus shown in FIG. 8 may be configured to perform steps, functions, or the like performed by the second communication apparatus in the foregoing method embodiments. For example, the communication apparatus may be the second communication apparatus or a chip, a functional module, or the like disposed in the second communication apparatus. This is not limited in embodiments of this application. The transceiver module 801 is configured to perform a receiving/sending-related operation of the second communication apparatus in the foregoing method embodiments, and the processing module 802 is configured to perform a processing-related operation of the second communication apparatus in the foregoing method embodiments.

For example, the transceiver module 801 is configured to receive a PPDU, and the PPDU includes a preamble sequence; and the processing module 802 is configured to process the PPDU.

It may be understood that the transceiver module 801 may receive a PPDU from another communication apparatus, or the transceiver module 801 inputs the PPDU or the like to another component or another functional module in the communication apparatus. Related descriptions of inputting other information by the transceiver module are similar. Details are not described below again.

In this embodiment of this application, for descriptions of the PPDU, the preamble sequence, and the like, refer to the descriptions in the foregoing method embodiments. Details are not described one by one herein again.

It may be understood that specific descriptions of the transceiver module and the processing module in embodiments of this application are merely examples. For specific functions, steps, or the like performed by the transceiver module and the processing module, refer to the foregoing method embodiments. Details are not described herein again. In addition, for a technical effect of this embodiment of this application, refer to the technical effect in the foregoing method embodiments. For brevity, details are not described herein again.

The foregoing describes the communication apparatus in embodiments of this application, and the following describes a possible product form of the communication apparatus. It should be understood that any product in any form that has a function of the communication apparatus in FIG. 8 falls within the protection scope of embodiments of this application. It should be further understood that the following description is merely an example, and does not limit a product form of the communication apparatus in embodiments of this application.

In a possible implementation, in the communication apparatus shown in FIG. 8, the processing module 802 may be one or more processors, and the transceiver module 801 may be a transceiver; or the transceiver module 801 may be a sending module and a receiving module, the sending module may be a transmitter, the receiving module may be a receiver, and the sending module and the receiving module are integrated into one device, for example, a transceiver. In embodiments of this application, the processor and the transceiver may be coupled, or the like. A connection manner between the processor and the transceiver is not limited in embodiments of this application. In a process of performing the foregoing method, a process of sending information (for example, sending a PPDU) in the foregoing method may be understood as a process of outputting the information by the processor. When outputting the information, the processor outputs the information to a transceiver, so that the transceiver transmits the information. After the information is outputted by the processor, other processing may further need to be performed on the information before the information arrives at the transceiver. Similarly, a process of receiving information (for example, receiving a PPDU) in the foregoing method may be understood as a process of receiving the input information by the processor. When the processor receives the input information, the transceiver receives the information and inputs the information to the processor. Further, after the transceiver receives the information, other processing may need to be performed on the information before the information is input into the processor.

FIG. 9 is a diagram of another structure of a communication apparatus according to an embodiment of this application. The communication apparatus may be a first communication apparatus, a second communication apparatus, or a chip in the first communication apparatus or the second communication apparatus. FIG. 9 shows only main components of the communication apparatus. In addition to a processor 1001, the communication apparatus may further include a transceiver 1002, a memory 1003, and an input/output apparatus (not shown in the figure).

The processor 1001 is mainly configured to: process a communication protocol and communication data, control the entire communication apparatus, execute a software program, and process data of the software program. The memory 1003 is mainly configured to store the software program and data. In a design, the transceiver 1002 may be referred to as a transceiver unit, a transceiver machine, a transceiver circuit, or the like, and is configured to implement a transceiver function. The transceiver 1002 may include a receiver and a transmitter. The receiver may be referred to as a receiver machine, a receiver circuit, or the like, and is configured to implement a receiving function. The transmitter may be referred to as a transmitter machine, a transmitter circuit, or the like, and is configured to implement a sending function. In another design, the transceiver 1002 may include a control circuit and an antenna. The control circuit is mainly configured to: perform conversion between a baseband signal and a radio frequency signal and process the radio frequency signal. The antenna is mainly configured to receive and send radio frequency signals in a form of an electromagnetic wave. The input/output apparatus, such as a touchscreen, a display, or a keyboard, is mainly configured to receive data input by a user and output data to the user.

After the communication apparatus is powered on, the processor 1001 may read the software program in the memory 1003, interpret and execute instructions of the software program, process the data of the software program, and control a medium access control (medium access control, MAC) layer and a physical layer (physical layer, PHY), to implement the method in embodiments of this application. When data needs to be sent in a wireless manner, the processor 1001 performs baseband processing on the to-be-sent data, and outputs a baseband signal to a radio frequency circuit. The radio frequency circuit performs radio frequency processing on the baseband signal, and then sends a radio frequency signal to the outside through the antenna in a form of an electromagnetic wave. When data is sent to the communication apparatus, the radio frequency circuit receives a radio frequency signal through the antenna, converts the radio frequency signal into a baseband signal, and outputs the baseband signal to the processor 1001. The processor 1001 converts the baseband signal into data, and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

The processor 1001, the transceiver 1002, and the memory 1003 may be connected through a communication bus.

For example, when the communication apparatus is configured to perform the steps, methods, or functions performed by the first communication apparatus in the foregoing method embodiments, the processor 1001 may be configured to perform step S101 in FIG. 4, and/or configured to perform another process of the technology described in this specification; and the transceiver 1002 may be configured to perform step S102 in FIG. 4, and/or configured to perform another process of the technology described in this specification.

For example, when the communication apparatus is configured to perform the steps, methods, or functions performed by the second communication apparatus in the foregoing method embodiments, the processor 1001 may be configured to perform step S103 in FIG. 4, and/or configured to perform another process of the technology described in this specification; and the transceiver 1002 may be configured to receive a PPDU, and/or configured to perform another process of the technology described in this specification.

In any one of the foregoing designs, the processor 1001 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In any one of the foregoing designs, the processor 1001 may store instructions, the instructions may be a computer program, and the computer program runs on the processor 1001, to enable the communication apparatus to perform the methods described in the foregoing method embodiments. The computer program may be embedded in the processor 1001. In this case, the processor 1001 may be implemented by hardware.

In an implementation, the communication apparatus may include a circuit. The circuit may implement a sending, receiving, or communication function in the foregoing method embodiments. The processor and the transceiver described in this application may be implemented on an integrated circuit (integrated circuit, IC), an analog IC, a radio frequency integrated circuit (radio frequency integrated circuit, RFIC), a mixed-signal IC, an application-specific integrated circuit (application-specific integrated circuit, ASIC), a printed circuit board (printed circuit board, PCB), an electronic device, or the like. The processor and the transceiver may alternatively be manufactured by using various IC process technologies, for example, a complementary metal oxide semiconductor (complementary metal oxide semiconductor, CMOS), an N-type metal oxide semiconductor (N-type Metal-oxide-semiconductor, NMOS), a p-channel metal oxide semiconductor (positive channel metal oxide semiconductor, PMOS), a bipolar junction transistor (bipolar junction transistor, BJT), a bipolar CMOS (BiCMOS), silicon germanium (SiGe), and gallium arsenide (GaAs).

It may be understood that the communication apparatus described in this embodiment of this application may further have more components and the like than those in FIG. 9. This is not limited in embodiments of this application. The foregoing method performed by the processor and the transceiver is merely an example. For specific steps performed by the processor and the transceiver, refer to descriptions in the foregoing method embodiments.

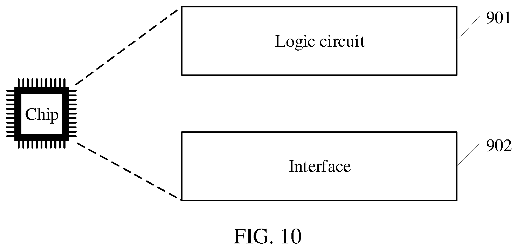

In another possible implementation, in the communication apparatus shown in FIG. 8, the processing module 802 may be one or more logic circuits, and the transceiver module 801 may be an input/output interface that is also referred to as a communication interface, an interface circuit, an interface, or the like. Alternatively, the transceiver module 801 may be a sending module and a receiving module. The sending module may be an output interface, and the receiving module may be an input interface. The sending module and the receiving module are integrated into one module, for example, an input/output interface. FIG. 10 is a diagram of still another structure of a communication apparatus according to an embodiment of this application. As shown in FIG. 10, the communication apparatus shown in FIG. 10 includes a logic circuit 901 and an interface 902. In other words, the processing module 802 may be implemented by using the logic circuit 901, and the transceiver module 801 may be implemented by using the interface 902. The logic circuit 901 may be a chip, a processing circuit, an integrated circuit, a system on chip (system on chip, SoC), or the like. The interface 902 may be a communication interface, an input/output interface, a pin, or the like. FIG. 10 shows an example in which the communication apparatus is a chip. The chip includes the logic circuit 901 and the interface 902.

In this embodiment of this application, the logic circuit and the interface may be coupled to each other. A specific manner of connection between the logic circuit and the interface is not limited in this embodiment of this application.

For example, when the communication apparatus is configured to perform the method, the function, or the step performed by the first communication apparatus in the foregoing method embodiments, the logic circuit 901 is configured to generate a PPDU, and the PPDU includes a preamble sequence; and the interface 902 is configured to output the PPDU.

For example, when the communication apparatus is configured to perform the method, the function, or the step performed by the second communication apparatus in the foregoing method embodiments, the interface 902 is configured to input a PPDU, and the PPDU includes a preamble sequence; and the logic circuit 901 is configured to process the PPDU.

In this embodiment of this application, for specific descriptions of the PPDU, the preamble sequence, and the like, refer to the foregoing method embodiments. Details are not described one by one herein again.

It may be understood that the communication apparatus shown in embodiments of this application may implement the method provided in embodiments of this application in a form of hardware, or may implement the method provided in embodiments of this application in a form of software. This is not limited in embodiments of this application.

For a specific implementation of the embodiment shown in FIG. 10, refer to the foregoing embodiments. Details are not described herein again.

An embodiment of this application further provides a communication system. The communication system includes a first communication apparatus and a second communication apparatus. The first communication apparatus and the second communication apparatus may be configured to perform the method in the foregoing method embodiments.

In addition, this application further provides a computer program. The computer program is used to implement operations and/or processing performed by the first communication apparatus in the method provided in this application.

This application further provides a computer program. The computer program is used to implement operations and/or processing performed by a second communication apparatus in the method provided in this application.

This application further provides a computer-readable storage medium. The computer-readable storage medium stores computer code. When the computer code is run on a computer, the computer is enabled to perform operations and/or processing performed by the first communication apparatus in the method provided in this application.

This application further provides a computer-readable storage medium. The computer-readable storage medium stores computer code. When the computer code is run on a computer, the computer is enabled to perform operations and/or processing performed by the second communication apparatus in the method provided in this application.

This application further provides a computer program product. The computer program product includes computer code or a computer program. When the computer code or the computer program runs on a computer, operations and/or processing performed by a first communication apparatus in the method provided in this application are performed.

This application further provides a computer program product. The computer program product includes computer code or a computer program. When the computer code or the computer program runs on a computer, operations and/or processing performed by a second communication apparatus in the method provided in this application are performed.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one position, or may be distributed on a plurality of network units. Some or all of the units may be selected based on an actual requirement to implement the technical effect of the solutions provided in embodiments of this application.

In addition, function units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technologies, or all or some of the technical solutions may be implemented in a form of a software product. The computer software product is stored in a readable storage medium and includes a plurality of instructions for instructing a computer device (which may be a personal computer, a server, or a network device) to perform all or some of the steps of the methods described in embodiments of this application. The readable storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A physical layer protocol data unit PPDU-based communication method, comprising:
generating a physical layer protocol data unit PPDU, wherein the PPDU comprises a preamble sequence, and the preamble sequence is any preamble sequence described in Table 2 to Table 8 in embodiments; and
sending the PPDU.

2. A physical layer protocol data unit PPDU-based communication method, comprising:
receiving a physical layer protocol data unit PPDU, wherein the PPDU comprises a preamble sequence, and the preamble sequence is any preamble sequence described in Table 2 to Table 8 in embodiments; and
processing the PPDU.

3. The method according to claim 1 or 2, wherein a quantity of elements 0 and a quantity of elements 1 in the preamble sequence are equal, and a quantity of consecutive 0s is less than or equal to a first value.

4. The method according to any one of claims 1 to 3, wherein a transmission bandwidth of the preamble sequence is less than or equal to 20 MHz.

5. The method according to any one of claims 1 to 4, wherein the preamble sequence is one of a plurality of predefined sequences, and each of the plurality of sequences is used to represent control information; and
the control information comprises one or more of the following items: a payload rate of the PPDU, a signal SIG field rate of the PPDU, an uplink or downlink flag of the PPDU, a version number of the PPDU, a transmission opportunity TXOP duration of the PPDU, or a modulation scheme of the PPDU.

6. The method according to claim 5, wherein the plurality of sequences comprise N sequences with a same length, a Hamming distance among the N sequences is greater than or equal to a second value, and N is an integer greater than or equal to 2.

7. The method according to claim 5 or 6, wherein the plurality of sequences comprise sequences with different lengths.

8. The method according to any one of claims 5 to 7, wherein the plurality of sequences are determined based on a same base sequence.

9. The method according to claim 8, wherein a quantity of elements 0 and a quantity of elements 1 in the base sequence are equal, and a quantity of consecutive 0s is less than or equal to the first value.

10. The method according to claim 8 or 9, wherein the plurality of sequences comprises one or more of the following items: the base sequence; a complement of elements of the base sequence; the base sequence repeated K times; "the complement of the elements of the base sequence" repeated K times; a sequence consisting of the base sequence and the complement of the elements of the base sequence; "the sequence consisting of the base sequence and the complement of the elements of the base sequence" repeated K times; a sequence consisting of the base sequence repeated K times and the complement of the elements of the base sequence; a sequence consisting of the base sequence and "the complement of the elements of the base sequence" repeated K times; or a sequence consisting of the base sequence repeated K times and "the complement of the elements of the base sequence" repeated K times; and K is a positive integer; and
the element complement indicates that an element 0 is changed to an element 1, and an element 1 is changed to an element 0.

11. The method according to any one of claims 1 to 10, wherein a length of the preamble sequence is any one of the following: 16, 32, 48, or 64.

12. A communication apparatus, comprising:
one or more processors, wherein the one or more processors are coupled to one or more memories; and
the one or more memories are configured to store a computer program, and the one or more processors are configured to execute the computer program stored in the one or more memories, to enable the communication apparatus to perform the method according to any one of claims 1 to 11.

13. A readable storage medium, wherein the readable storage medium is configured to store a computer program, and when the computer program is executed by a processor, a communication apparatus comprising the processor is enabled to perform the method according to any one of claims 1 to 11.

14. A computer program product, wherein when the computer program product is executed, the method according to any one of claims 1 to 11 is performed.
